# EUROPÄISCHE PATENTSCHRIFT

(11) **EP 3 583 111 B1**
(45) Veröffentlichungstag und Bekanntmachung des Hinweises auf die Patenterteilung: **23.12.2020**
(21) Anmeldenummer: 18704021.7
(22) Anmeldetag: 13.02.2018
(51) Int. Cl.: C07F 15/00

(54) **VERFAHREN ZUR HERSTELLUNG ORTHO-METALLIERTER METALLVERBINDUNGEN**
PROCESS FOR PREPARING ORTHO-METALLATED METAL COMPOUNDS
PROCÉDÉ DE PRODUCTION DE COMPOSÉS MÉTALLIQUES ORTHO-METALLÉS

(30) Priorität: 14.02.2017 EP 17155959
(43) Veröffentlichungstag der Anmeldung: 25.12.2019
(73) Patentinhaber: Merck Patent GmbH, 64293 Darmstadt (DE)
(72) Erfinder: STOESSEL, Philipp, 60389 Frankfurt am Main (DE); BRUECKL, Tobias, 64342 Seeheim-Jugenheim (DE); BUBACK, Verena, 64347 Griesheim (DE)
(86) Internationale Anmeldenummer: PCT/EP2018/053468
(87) Internationale Veröffentlichungsnummer: WO 2018/149793

(56) Entgegenhaltungen:
- WO-A1-2013/098189
- WO-A1-2016/006523

## Beschreibung

Die vorliegende Erfindung beschreibt ein Verfahren zur Herstellung tris-cyclometallierter Iridiumverbindungen aus einfachen Iridium-Ausgangsverbindungen in wässrigem Medium.

Metallorganische Iridiumverbindungen finden Einsatz als funktionelle Materialien in einer Reihe verschiedenartiger Anwendungen, die im weitesten Sinne der Elektronikindustrie zugerechnet werden können, insbesondere als phosphoreszierende Emitter in organischen Elektrolumineszenzvorrichtungen. Hierfür muss der effiziente chemisch-synthetische Zugang zu den entsprechenden hochreinen Organometallverbindungen gegeben sein. Dies ist insbesondere unter Berücksichtigung der Seltenheit von Ir von maßgebender Bedeutung für die ressourcenschonende Nutzung der genannten Verbindungsklasse.

Für die Darstellung tris-cyclometallierter Organoiridiumverbindungen sind verschiedene Verfahren bekannt. Diesen ist gemeinsam, dass sie in organischen Lösemitteln oder Mischungen aus organischen Lösemitteln mit Wasser durchgeführt werden, häufig bei hohen Temperaturen und langen Reaktionszeiten. Hier sind noch Verbesserungen wünschenswert, um die Reaktionen auch unter Zusatz geringerer Mengen oder ganz ohne Zusatz organischer Lösemittel durchführen zu können. Weiterhin sind Verbesserungen der Ausbeute insgesamt und der Ausbeute des Anteils an facialem Isomer wünschenswert.

WO 2013/098189 A1 offenbart ein Verfahren zur Herstellung von [Ir(L1-15)2(L1-1)] ausgehend von [(L)2Ir(µ-Cl)2Ir(L)2] in Diglyme/Wasser bei 130°C.

Eine der vorliegenden Erfindung zugrunde liegende Aufgabe ist daher die Bereitstellung eines breit anwendbaren Verfahrens, durch welches sich tris-cyclometallierte Iridiumkomplexe einfach, in hoher Ausbeute und insbesondere auch aus einfach zugänglichem Iridium(III)-halogenid synthetisieren lassen. Insbesondere ist es eine Aufgabe, ein breit anwendbares Verfahren zur Synthese tris-cyclometallierter Iridiumkomplexe zur Verfügung zu stellen, welches in Wasser durchgeführt werden kann, um die Verwendung organischer Lösemittel, die häufig brennbar und/oder toxisch sind, vermeiden zu können. Eine weitere Aufgabe ist die Bereitstellung eines Verfahrens zur Herstellung tris-ortho-metallierter Iridiumkomplexe, welches einen hohen Anteil des facialen Isomers liefert.

Es wurde überraschend gefunden, dass die Synthese tris-cyclometallierter Iridiumkomplexe ausgehend von Iridiumhalogenid, halogenidverbrückten dimeren Iridiumkomplexen oder anderen Iridiumedukten in Wasser oder wässriger Lösung in sehr hohen Ausbeuten und Reinheiten durchgeführt werden kann, wenn die Reaktion in Anwesenheit eines anionischen Tensids entsprechend Anspruch 1 und optional in Anwesenheit eines Additivs, wie z. B. einer Base oder eines anorganischen Salzes, durchgeführt wird. Weiterhin entsteht bei diesem Verfahren das faciale Isomer in hoher Ausbeute.

Gegenstand der vorliegenden Erfindung ist daher ein Verfahren zur Herstellung eines tris-cyclometallierten Iridiumkomplexes durch Umsetzung einer Iridiumverbindung mit einem bidentaten Liganden, welcher unter Cyclometallierung an das Iridium koordiniert, dadurch gekennzeichnet, dass das Verfahren in wässrigem Medium unter Zusatz eines anionischen Tensids entsprechend Anspruch 1 durchgeführt wird.

Ein tris-cyclometallierter Iridiumkomplex im Sinne der vorliegenden Erfindung ist ein Iridiumkomplex, welcher drei bidentate, cyclometallierte Liganden aufweist. Dabei umfasst der Begriff "tris-cyclometallierter Iridiumkomplex" im Sinne der vorliegenden Erfindung auch Iridiumkomplexe, in denen entweder zwei der drei bidentaten cyclometallierten Liganden oder alle drei bidentaten cyclometallierten Liganden über eine Brücke kovalent miteinander verknüpft sind, so dass entweder ein tetradentater Ligand oder ein tripodaler, hexadentater Ligand entsteht. Ein cyclometallierter Ligand im Sinne der vorliegenden Erfindung ist ein Ligand, welcher mit dem Metall, an das er koordiniert, einen Metallacyclus bildet, wobei zwischen dem Liganden und dem Metall mindestens eine Metall-Kohlenstoff-Bindung vorliegt. Der durch das Iridium und den Liganden gebildete Metallacyclus weist bevorzugt eine Ringgröße von 5 oder 6 Ringatomen auf, insbesondere von 5 Ringatomen. Dies wird im Folgenden schematisch dargestellt: 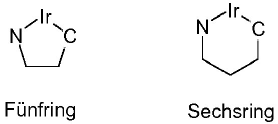 wobei N ein koordinierendes Stickstoffatom und C ein koordinierendes Kohlenstoffatom darstellt und die eingezeichneten Kohlenstoffatome Atome des Liganden darstellen.

Je nach Ausgangsprodukt und Liganden können sowohl homoleptische wie auch heteroleptische Metallkomplexe synthetisiert werden. Unter einem homoleptischen Komplex wird eine Verbindung verstanden, in der nur gleiche Liganden an ein Metall gebunden sind. Heteroleptische Komplexe sind solche, in denen unterschiedliche Liganden an das Metall gebunden sind. Dies bezieht sich sowohl auf Liganden mit unterschiedlicher Ligandengrundstruktur wie auch auf Liganden, die dieselbe Grundstruktur aufweisen, die jedoch unterschiedlich substituiert sind.

In einer bevorzugten Ausführungsform der Erfindung handelt es sich bei dem tris-cyclometallierten Iridiumkomplex um einen homoleptischen Komplex, d. h. die drei bidentaten cyclometallierten Liganden sind bevorzugt identisch. Diese Bevorzugung gilt insbesondere, wenn die drei Liganden nicht über eine Brücke kovalent zu einem hexadentaten, tripodalen Liganden verknüpft sind. Wenn die drei Liganden über eine Brücke kovalent zu einem hexadentaten, tripodalen Liganden verknüpft sind, sind gleichermaßen auch Komplexe bevorzugt, bei denen sich die einzelnen bidentaten Teilliganden des tripodalen Liganden voneinander unterscheiden.

In einer weiteren bevorzugten Ausführungsform der Erfindung handelt es sich bei dem tris-cyclometallierten Iridiumkomplex um das faciale Isomer des Komplexes. Faciale bzw. meridionale Koordination im Sinne dieser Anmeldung beschreibt die oktaedrische Umgebung des Iridiums mit den sechs Donoratomen. Eine faciale Koordination liegt vor, wenn drei identische Donoratome eine Dreiecksfläche im (pseudo)oktaedrischen Koordinationspolyeder und drei identische, aber von den ersten verschiedene Donoratome eine andere Dreiecksfläche im (pseudo)oktaedrischen Koordinationspolyeder besetzen. Bei einer meridionalen Koordination besetzen drei identische Donoratome den einen Meridian im (pseudo)-oktaedrischen Koordinationspolyeder und drei identische, aber von den ersten verschiedene Donoratome den anderen Meridian im (pseudo)-oktaedrischen Koordinationspolyeder. Dies ist im Folgenden am Beispiel der Koordination von drei N-Donoratomen und drei C-Donoratomen gezeigt (Schema 1). Da sich diese Definition auf Donoratome bezieht und nicht auf die bidentaten Liganden, die diese Donoratome bereitstellen, können die drei bidentaten cyclometallierten Liganden gleich oder verschieden sein und trotzdem einer facialen oder meridionalen Koordination im Sinne dieser Anmeldung entsprechen. Als identische Donoratome werden solche verstanden, die aus den gleichen Elementen (z. B. Kohlenstoff bzw. Stickstoff) bestehen, unabhängig davon, ob diese Elemente in unterschiedliche Strukturen eingebaut sind.

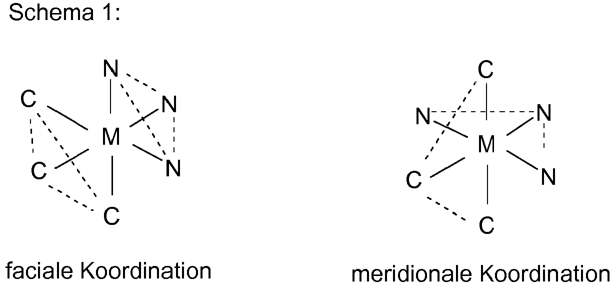

Der durch das erfindungsgemäße Verfahren zugängliche Iridiumkomplex weist bevorzugt eine Struktur der folgenden Formel (1) auf, 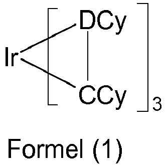 worin gilt:
- DCy: ist bei jedem Auftreten gleich oder verschieden eine Heteroarylgruppe mit 5 bis 14 aromatischen Ringatomen, die mindestens ein neutrales Donoratom, ausgewählt aus Stickstoff oder einem Carben-Kohlenstoffatom, enthält, über welches die Gruppe an das Iridium gebunden ist, und die durch einen oder mehrere Substituenten R substituiert sein kann;
- CCy: ist bei jedem Auftreten gleich oder verschieden eine Aryl- oder Heteroarylgruppe mit 5 bis 14 aromatischen Ringatomen, die ein Kohlenstoffatom enthält, über welches die Gruppe an das Iridium gebunden ist, und die einen oder mehrere Substituenten R tragen kann;
die Gruppen DCy und CCy sind über eine kovalente Bindung miteinander verbunden und können weiterhin über einen Rest R miteinander verbunden sein;
- R: ist bei jedem Auftreten gleich oder verschieden H, D, F, Cl, Br, I, NO₂, CN, OH, N(R¹)₂, OR¹, SR¹, B(OR¹)₂, CHO, COOH, CON(R¹)₂, C(=O)R¹, P(=O)(R¹)₂, S(=O)R¹, S(=O)₂R¹, Si(R¹)₃, eine geradkettige Alkylgruppe mit 1 bis 20 C-Atomen oder eine Alkenyl- oder Alkinylgruppe mit 2 bis 20 C-Atomen oder eine verzweigte oder cyclische Alkylgruppe mit 3 bis 20 C-Atomen, wobei die Alkyl-, Alkenyl- oder Alkinylgruppe jeweils mit einem oder mehreren Resten R¹ substituiert sein kann und/oder wobei ein oder mehrere nicht benachbarte CH2-Gruppen durch O, S, NR¹, CONR¹ oder CO-O ersetzt sein können, oder ein aromatisches oder heteroaromatisches Ringsystem mit 5 bis 40 aromatischen Ringatomen, das durch einen oder mehrere Reste R¹ substituiert sein kann; dabei können zwei oder mehrere Substituenten R, sowohl am selben Ring CCy bzw. DCy als auch an den beiden unterschiedlichen Ringen CCy und DCy zusammen, miteinander oder mit R¹ ein weiteres Ringsystem aufspannen;
- R¹: ist bei jedem Auftreten gleich oder verschieden H, D, F, Cl, Br, I, N(R²)₂, OR², SR², CN, NO₂, Si(R²)₃, B(OR²)₂, C(=O)R², P(=O)(R²)₂, S(=O)R², S(=O)₂R², OSO₂R², eine geradkettige Alkylgruppe mit 1 bis 20 C-Atomen oder eine Alkenyl- oder Alkinylgruppe mit 2 bis 20 C-Atomen oder eine verzweigte oder cyclische Alkylgruppe mit 3 bis 20 C-Atomen, wobei die Alkyl-, Alkenyl- oder Alkinylgruppe jeweils mit einem oder mehreren Resten R² substituiert sein kann und/oder wobei eine oder mehrere nicht benachbarte CH₂-Gruppen durch Si(R²)₂, C=O, NR², O, S oder CONR² ersetzt sein können, oder ein aromatisches oder heteroaromatisches Ringsystem mit 5 bis 40 aromatischen Ringatomen, das jeweils durch einen oder mehrere Reste R² substituiert sein kann; dabei können mehrere Substituenten R¹ auch miteinander ein Ringsystem bilden;
- R²: ist bei jedem Auftreten gleich oder verschieden H, D, F oder ein aliphatischer, aromatischer und/oder heteroaromatischer organischer Rest, insbesondere ein Kohlenwasserstoffrest, mit 1 bis 20 C-Atomen, in dem auch ein oder mehrere H-Atome durch F ersetzt sein können;
dabei können auch zwei Liganden CCy-DCy über Reste R miteinander zu einem tetradentaten Liganden oder alle drei Liganden CCy-DCy über Reste R miteinander zu tripodalen hexadentaten Liganden verknüpft sein.

Der bidentate Ligand weist bevorzugt eine Struktur der folgenden Formel (2) auf, 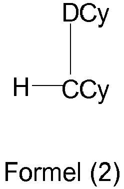 worin DCy und CCy die unter Formel (1) genannten Bedeutungen haben. Dabei ist das Wasserstoffatom an CCy in ortho-Position zur Bindung von DCy gebunden.

Wenn die Reste miteinander ein Ringsystem bilden, so können hieraus kondensierte aromatische oder nicht-aromatische Systeme gebildet werden. Generell kann das so gebildete Ringsystem mono- oder polycyclisch sein, und es kann aliphatisch, heteroaliphatisch, aromatisch oder heteroaromatisch sein. Dabei sei nochmals explizit betont, dass auch Reste, die an verschiedenen Gruppen, beispielsweise an CCy und DCy gebunden sind, miteinander ein Ringsystem bilden können.

Unter der Formulierung, dass zwei oder mehr Reste miteinander einen Ring bilden können, soll im Rahmen der vorliegenden Beschreibung unter anderem verstanden werden, dass die beiden Reste miteinander durch eine chemische Bindung unter formaler Abspaltung von zwei Wasserstoffatomen verknüpft sind. Dies wird durch das folgende Schema verdeutlicht.

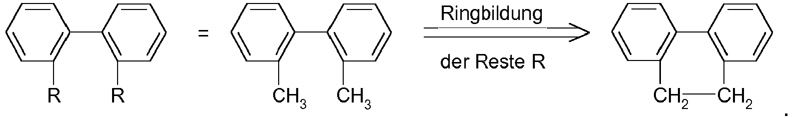

Weiterhin soll unter der oben genannten Formulierung aber auch verstanden werden, dass für den Fall, dass einer der beiden Reste Wasserstoff darstellt, der zweite Rest unter Bildung eines Rings an die Position, an die das Wasserstoffatom gebunden war, bindet. Dies soll durch das folgende Schema verdeutlicht werden:

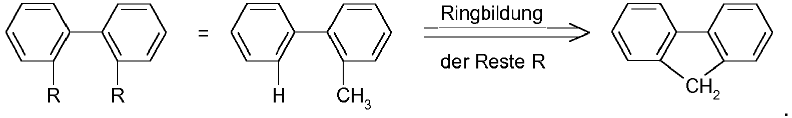

Die Bildung eines aromatischen Ringsystems soll durch das folgende Schema verdeutlicht werden:

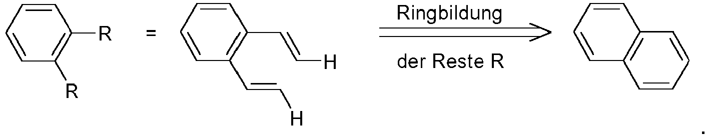

Eine Arylgruppe im Sinne dieser Erfindung enthält 6 bis 40 C-Atome; eine Heteroarylgruppe im Sinne dieser Erfindung enthält 2 bis 40 C-Atome und mindestens ein Heteroatom, mit der Maßgabe, dass die Summe aus C-Atomen und Heteroatomen mindestens 5 ergibt. Die Heteroatome sind bevorzugt ausgewählt aus N, O und/oder S. Dabei wird unter einer Arylgruppe bzw. Heteroarylgruppe entweder ein einfacher aromatischer Cyclus, also Benzol, bzw. ein einfacher heteroaromatischer Cyclus, beispielsweise Pyridin, Pyrimidin, Thiophen, etc., oder eine kondensierte Aryl- oder Heteroarylgruppe, beispielsweise Naphthalin, Anthracen, Phenanthren, Chinolin, Isochinolin, etc., verstanden.

Ein aromatisches Ringsystem im Sinne dieser Erfindung enthält 6 bis 40 C-Atome im Ringsystem. Ein heteroaromatisches Ringsystem im Sinne dieser Erfindung enthält 1 bis 40 C-Atome und mindestens ein Heteroatom im Ringsystem, mit der Maßgabe, dass die Summe aus C-Atomen und Heteroatomen mindestens 5 ergibt. Die Heteroatome sind bevorzugt ausgewählt aus N, O und/oder S. Unter einem aromatischen oder heteroaromatischen Ringsystem im Sinne dieser Erfindung soll ein System verstanden werden, das nicht notwendigerweise nur Aryl- oder Heteroarylgruppen enthält, sondern in dem auch mehrere Aryl- oder Heteroarylgruppen durch eine nicht-aromatische Einheit, wie z. B. ein C-, N- oder O-Atom oder eine Carbonylgruppe, unterbrochen sein können. So sollen beispielsweise auch Systeme wie 9,9'-Spirobifluoren, 9,9-Diarylfluoren, Triarylamin, Diarylether, Stilben, etc. als aromatische Ringsysteme im Sinne dieser Erfindung verstanden werden, und ebenso Systeme, in denen zwei oder mehrere Arylgruppen beispielsweise durch eine lineare oder cyclische Alkylgruppe oder durch eine Silylgruppe unterbrochen sind. Weiterhin sollen Systeme, in denen zwei oder mehrere Aryl- oder Heteroarylgruppen direkt aneinander gebunden sind, wie z. B. Biphenyl, Terphenyl, Quaterphenyl oder Bipyridin, ebenfalls als aromatisches bzw. heteroaromatisches Ringsystem verstanden werden.

Unter einer cyclischen Alkylgruppe im Sinne dieser Erfindung wird eine monocyclische, eine bicyclische oder eine polycyclische Gruppe verstanden.

Im Rahmen der vorliegenden Erfindung werden unter einer C₁- bis C₄₀-Alkylgruppe, in der auch einzelne H-Atome oder CH₂-Gruppen durch die oben genannten Gruppen substituiert sein können, besonders bevorzugt die Reste Methyl, Ethyl, n-Propyl, i-Propyl, n-Butyl, i-Butyl, s-Butyl, t-Butyl, 2-Methylbutyl, n-Pentyl, s-Pentyl, Cyclopentyl, n-Hexyl, Cyclohexyl, n-Heptyl, Cycloheptyl, n-Octyl, Cyclooctyl, 2-Ethylhexyl, Adamantyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden. Unter einer C₁- bis C₄₀-Alkoxygruppe werden besonders bevorzugt Methoxy, Ethoxy, n-Propoxy, i-Propoxy, n-Butoxy, i-Butoxy, s-Butoxy, t-Butoxy oder 2-Methylbutoxy verstanden. Unter einem aromatischen oder heteroaromatischen Ringsystem mit 1 bis 30 aromatischen Ringatomen, welches noch jeweils mit den oben genannten Resten R² bzw. R³ substituiert sein kann und welches über beliebige Positionen am Aromaten bzw. Heteroaromaten verknüpft sein kann, werden insbesondere Gruppen verstanden, die abgeleitet sind von Benzol, Naphthalin, Anthracen, Phenanthren, Pyren, Chrysen, Perylen, Fluoranthen, Tetracen, Pentacen, Benzpyren, Biphenyl, Biphenylen, Terphenyl, Terphenylen, Fluoren, Spirobifluoren, Truxen, Isotruxen, Dihydrophenanthren, Dihydropyren, Tetrahydropyren, cis- oder trans-Indenofluoren, Furan, Benzofuran, Isobenzofuran, Dibenzofuran, Thiophen, Benzothiophen, Isobenzothiophen, Dibenzothiophen, Pyrrol, Indol, Isoindol, Carbazol, Pyridin, Chinolin, Isochinolin, Chinoxalin, Chinazolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin, Benzpyrimidin, Pyrazin, Phenazin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4 Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin und Benzothiadiazol. Generell können in dem erfindungsgemäßen Verfahren alle Liganden eingesetzt werden, wie sie üblicherweise in cyclometallierten Komplexen für den Einsatz in organischen Elektrolumineszenzvorrichtungen verwendet werden.

In bevorzugten Komplexen der Formel (1) bzw. Liganden der Formel (2) steht das Symbol CCy für eine Aryl- oder Heteroarylgruppe mit 5 bis 13 aromatischen Ringatomen, besonders bevorzugt mit 6 bis 10 aromatischen Ringatomen, ganz besonders bevorzugt mit 6 aromatischen Ringatomen, welche jeweils mit einem oder mehreren Substituenten R substituiert sein kann. Insbesondere bevorzugt ist CCy eine Phenylgruppe, die mit einem oder mehreren Substituenten R substituiert sein kann. Dabei muss der unkoordinierte Ligand in mindestens einer ortho-Position zur Bindung von DCy ein unsubstituiertes Kohlenstoffatom aufweisen, welches dann an das Iridium binden kann.

Besonders bevorzugte aromatische Gruppen CCy sind Phenyl, Naphthyl, Fluorenyl und Phenanthrenyl, ganz besonders bevorzugt Phenyl und Naphthyl, insbesondere Phenyl, welche jeweils durch einen oder mehrere Reste R substituiert sein können. Bevorzugte heteroaromatische Gruppen CCy sind solche mit mindestens einem Heteroatom und mindestens zwei C-Atomen, wobei die Summe aus Heteroatomen und C-Atomen mindestens 5 ergeben muss. Die Heteroatome sind bevorzugt ausgewählt aus N, S und/oder O. Bevorzugte heteroaromatische Gruppen CCy bzw. DCy enthalten 5 bis 14 aromatische Ringatome, besonders bevorzugt 5, 6, 9 oder 10 aromatische Ringatome. Besonders bevorzugte heteroaromatische Gruppen sind abgeleitet von Thiophen, Pyrrol, Furan, Imidazol, Pyrazol, Pyridin, Pyrazin, Pyrimidin, Pyridazin, Benzothiophen, Indol, Carbazol, Benzofuran, Chinolin, Isochinolin oder Chinoxalin, welche jeweils durch einen oder mehrere Reste R substituiert sein können.

Bevorzugte Ausführungsformen der Gruppe CCy sind die Strukturen der folgenden Formeln (CCy-1) bis (CCy-20), 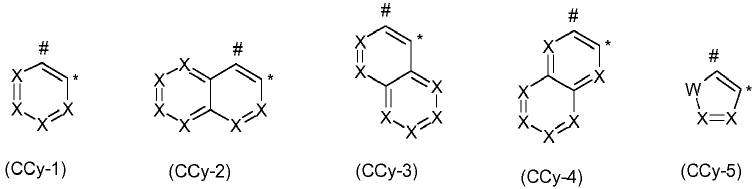 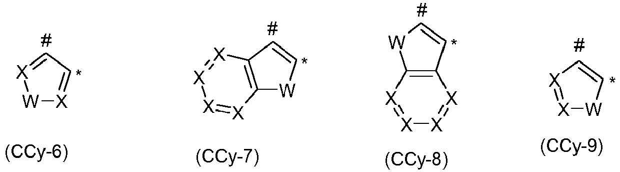 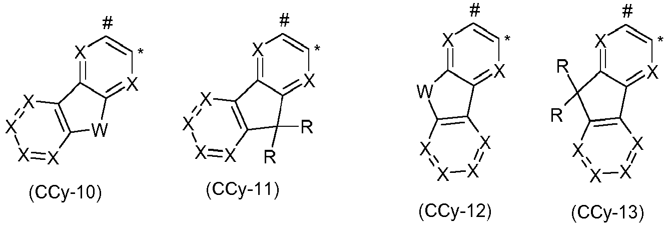 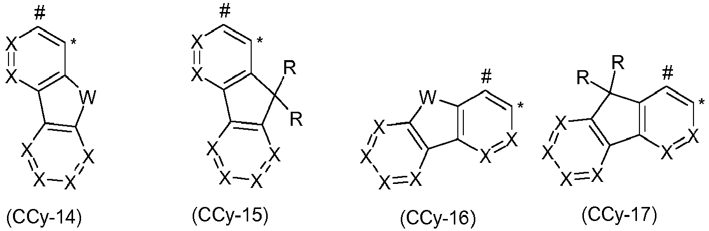 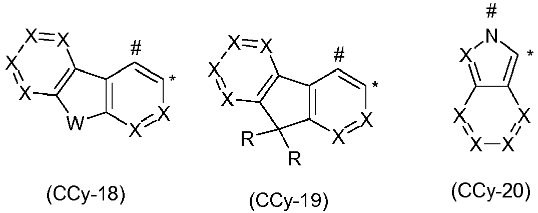 wobei die Gruppe jeweils an der durch # gekennzeichneten Position an DCy bindet und an der durch * gekennzeichneten Position an das Iridium koordiniert, R die oben genannten Bedeutungen aufweist und für die weiteren verwendeten Symbole gilt:
- X: ist bei jedem Auftreten gleich oder verschieden CR oder N mit der Maßgabe, dass maximal zwei Symbole X pro Cyclus für N stehen;
- W: ist bei jedem Auftreten gleich oder verschieden NR, O oder S.

Bevorzugt stehen insgesamt maximal zwei Symbole X in CCy für N, besonders bevorzugt steht maximal ein Symbol X in CCy für N, und ganz besonders bevorzugt stehen alle Symbole X für CR.

Besonders bevorzugte Gruppen CCy sind die Gruppen der folgenden Formeln (CCy-1a) bis (CCy-20a), 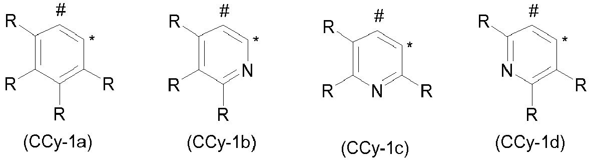 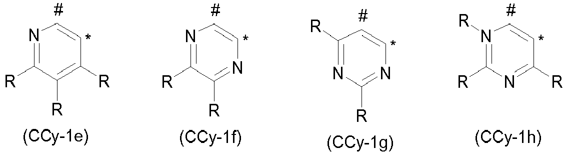 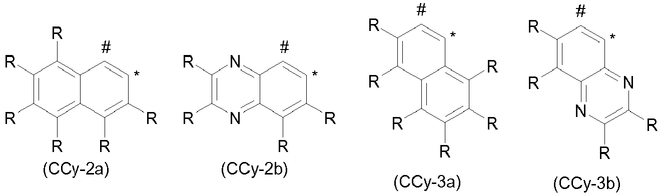 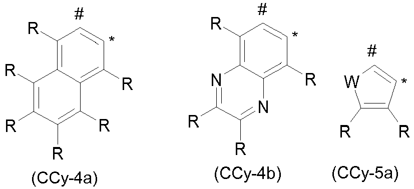 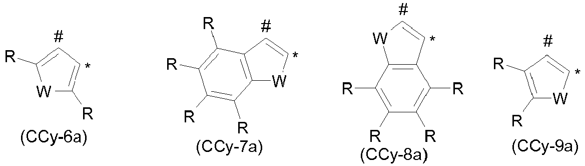 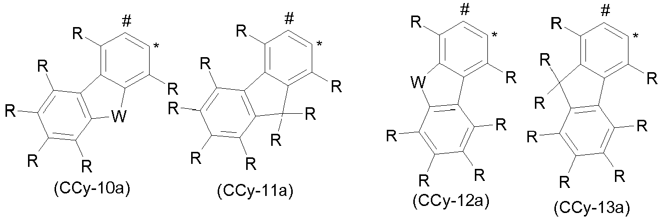 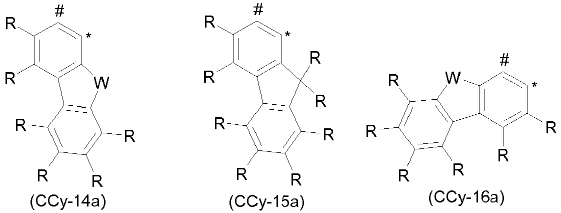 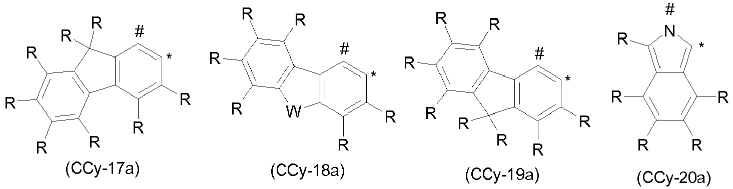 wobei die verwendeten Symbole die oben genannten Bedeutungen aufweisen.

Bevorzugte Gruppen unter den Gruppen (CCy-1) bis (CCy-20) sind die Gruppen (CCy-1), (CCy-3), (CCy-8), (CCy-10), (CCy-12), (CCy-13) und (CCy-16), und besonders bevorzugt sind die Gruppen (CCy-1a), (CCy-3a), (CCy-8a), (CCy-10a), (CCy-12a), (CCy-13a) und (CCy-16a).

In bevorzugten Komplexen der Formel (1) bzw. Liganden der Formel (2) steht das Symbol DCy, gleich oder verschieden bei jedem Auftreten, für eine Heteroarylgruppe mit 5 bis 13 aromatischen Ringatomen steht, besonders bevorzugt mit 6 bis 10 aromatischen Ringatomen, ganz besonders bevorzugt mit 6 aromatischen Ringatomen, welche jeweils durch einen oder mehrere Substituenten R substituiert sein können. Dabei muss DCy in mindestens einer ortho-Position zur Bindung von CCy ein Stickstoffatom oder ein Carben-Kohlenstoffatom bzw. die Vorstufe eines Carben-Kohlenstoffatoms als Donoratom enthalten.

Besonders bevorzugte Cyclen DCy sind ausgewählt aus Pyridin, Chinolin, Isochinolin, Chinoxalin, Chinazolin, 2-Azaanthracen, Phenanthridin, Oxazol, Thiazol, Benzoxazol oder Benzthiazol, insbesondere Pyridin, Chinolin, Isochinolin oder Chinazolin, welche jeweils durch einen oder mehrere Reste R substituiert sein können.

Bevorzugte Ausführungsformen der Gruppe DCy sind die Strukturen der folgenden Formeln (DCy-1) bis (DCy-14), 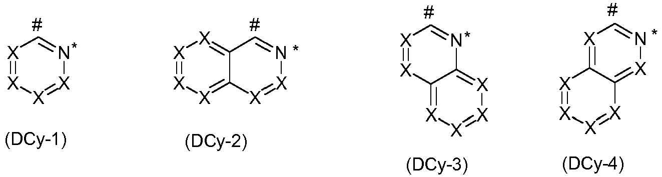 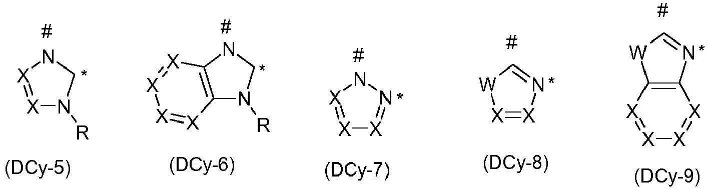 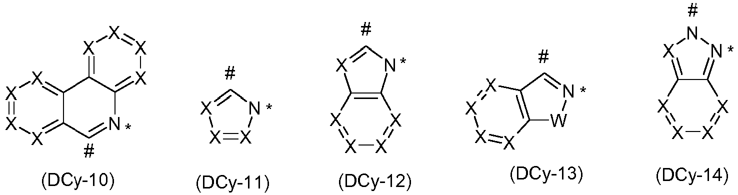 wobei die Gruppe jeweils an der durch # gekennzeichneten Position an CCy bindet und an der durch * gekennzeichneten Position an das Iridium koordiniert und wobei X, W und R die oben genannten Bedeutungen aufweisen.

Dabei koordinieren die Gruppen (DCy-1) bis (DCy-4), (DCyD-7) bis (DCy-10), (DCy-13) und (DCy-14) über ein neutrales Stickstoffatom, (DCy-5) und (DCy-6) über ein Carben-Kohlenstoffatom und (DCy-11) und (DCy-12) über ein anionisches Stickstoffatom an das Metall.

Bevorzugt stehen insgesamt maximal zwei Symbole X in DCy für N, besonders bevorzugt steht maximal ein Symbol X in DCy für N, und ganz besonders bevorzugt stehen alle Symbole X für CR.

Besonders bevorzugte Gruppen CyD sind die Gruppen der folgenden Formeln (CyD-1a) bis (CyD-14b), 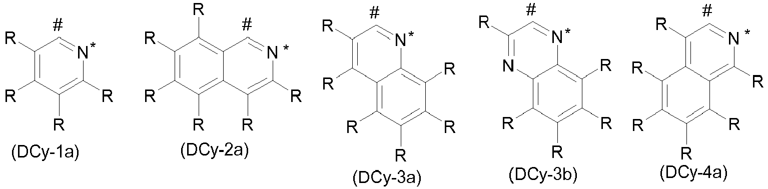 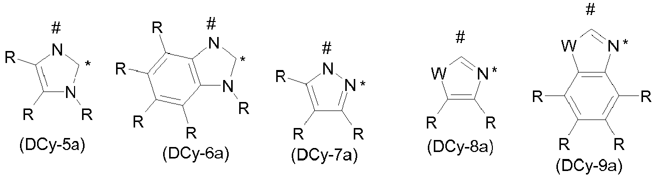 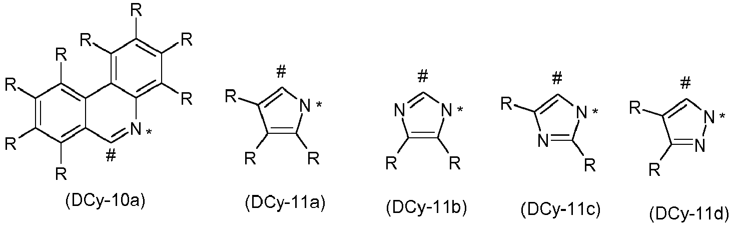 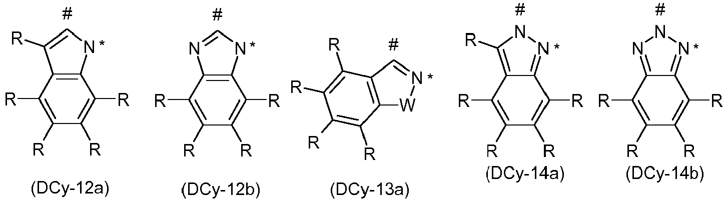 wobei die verwendeten Symbole die oben genannten Bedeutungen aufweisen.

Bevorzugte Gruppen unter den Gruppen (DCy-1) bis (DCy-14) sind die Gruppen (DCy-1), (DCy-2), (DCy-3), (DCy-4), (DCy-5) und (DCy-6), insbesondere (DCy-1), (DCy-2) und (DCy-3), und besonders bevorzugt sind die Gruppen (DCy-1a), (DCy-2a), (DCy-3a), (DCy-4a), (DCy-5a) und (DCy-6a), insbesondere (DCy-1a), (DCy-2a) und (DCy-3a).

In einer besonders bevorzugten Ausführungsform der Erfindung handelt es sich bei dem Liganden um ein Phenylpyridin-Derivat der folgenden Formel (2a), 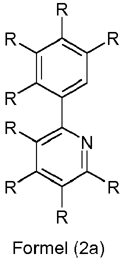 wobei R die oben genannten Bedeutungen aufweist.

In einer bevorzugten Ausführungsform der Erfindung ist der Rest R an CCy bzw. DCy bzw. in Formel (2a) bei jedem Auftreten gleich oder verschieden ausgewählt aus der Gruppe bestehend aus H, D, F, Cl, Br, CN, einer geradkettigen Alkylgruppe mit 1 bis 10 C-Atomen oder einer Alkenyl- oder Alkinylgruppe mit 2 bis 10 C-Atomen oder einer verzweigten oder cyclischen Alkylgruppe mit 3 bis 10 C-Atomen, wobei die Alkyl-, Alkenyl- oder Alkinylgruppe jeweils mit einem oder mehreren Resten R¹ substituiert sein kann und/oder wobei ein oder mehrere nicht benachbarte CH2-Gruppen durch O ersetzt sein können, oder einem aromatischen oder heteroaromatischen Ringsystem mit 5 bis 24 aromatischen Ringatomen, das durch einen oder mehrere Reste R¹ substituiert sein kann; dabei können zwei oder mehrere Substituenten R, sowohl am selben Ring CCy bzw. DCy als auch an den beiden unterschiedlichen Ringen CCy und DCy zusammen, wiederum miteinander oder mit R¹ ein weiteres Ringsystem aufspannen. Besonders bevorzugt ist der Rest R bei jedem Auftreten gleich oder verschieden ausgewählt aus der Gruppe bestehend aus H, F, CN, einer geradkettigen Alkylgruppe mit 1 bis 5 C-Atomen oder einer Alkenyl- oder Alkinylgruppe mit 2 bis 5 C-Atomen oder einer verzweigten oder cyclischen Alkylgruppe mit 3 bis 6 C-Atomen, wobei die Alkyl-, Alkenyl- oder Alkinylgruppe jeweils mit einem oder mehreren Resten R¹ substituiert sein kann, oder einem aromatischen oder heteroaromatischen Ringsystem mit 6 bis 13 aromatischen Ringatomen, das durch einen oder mehrere Reste R¹ substituiert sein kann; dabei können zwei oder mehrere Substituenten R, sowohl am selben Ring CCy bzw. DCy als auch an den beiden unterschiedlichen Ringen CCy und DCy zusammen, wiederum miteinander oder mit R¹ ein weiteres Ringsystem aufspannen. Weiterhin können mehrere Reste R an unterschiedlichen Liganden miteinander zu einem polypodalen Liganden verknüpft sein.

In einer weiteren bevorzugten Ausführungsform der Erfindung ist der Rest R¹ bei jedem Auftreten gleich oder verschieden ausgewählt aus der Gruppe bestehend aus H, D, F, einer geradkettigen Alkylgruppe mit 1 bis 5 C-Atomen oder einer Alkenyl- oder Alkinylgruppe mit 2 bis 5 C-Atomen oder einer verzweigten oder cyclischen Alkylgruppe mit 3 bis 6 C-Atomen, wobei die Alkyl-, Alkenyl- oder Alkinylgruppe jeweils mit einem oder mehreren Resten R² substituiert sein kann, oder einem aromatischen oder heteroaromatischen Ringsystem mit 5 bis 13 aromatischen Ringatomen, das jeweils durch einen oder mehrere Reste R² substituiert sein kann; dabei können mehrere Substituenten R¹ auch miteinander ein Ringsystem bilden.

Bevorzugte Iridiumverbindungen, die als Edukt in dem erfindungsgemäßen Verfahren eingesetzt werden können, sind die Verbindungen der folgenden Formeln (3) bis (8), IrHal₃ ^{∗} z H₂O ^{∗} y HHal A₃[IrHal₆] ^{∗} z H₂O ^{∗} y HHal Ir(OOCR)₃ Formel (3) Formel (4) Formel (5) 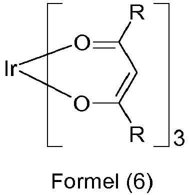 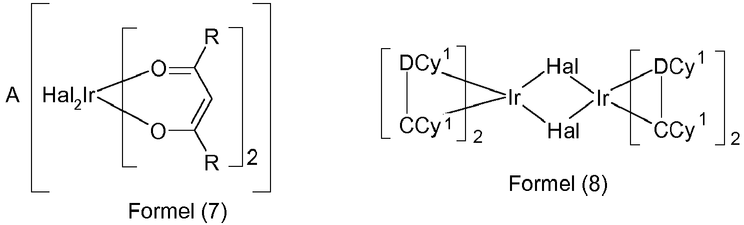 wobei R die oben genannten Bedeutungen aufweist, CCy¹ gleich oder verschieden dieselben Bedeutungen aufweist wie CCy, DCy¹ gleich oder verschieden dieselben Bedeutungen aufweist wie DCy und für die weiteren verwendeten Symbole und Indizes gilt:
- Hal: ist bei jedem Auftreten gleich oder verschieden F, Cl, Br oder I;
- A: ist bei jedem Auftreten gleich oder verschieden ein Alkalimetallkation, ein Ammoniumkation, ein Tetraalkylammoniumkation mit 4 bis 40 C-Atomen oder ein Tetraalkylphosphoniumkation mit 4 bis 40 C-Atomen;
- z: ist 0 bis 100;
- y: ist 0 bis 100.

Dabei steht R in Formeln (5), (6) und (7) bevorzugt für eine Alkylgruppe mit 1 bis 10 C-Atomen oder ein aromatisches oder heteroaromatisches Ringsystem mit 5 bis 12 aromatischen Ringatomen, das durch einen oder mehrere Reste R¹ substitutiert sein kann. Besonders bevorzugt steht R in den Formeln (5), (6) und (7) für eine Alkylgruppe mit 1 bis 5 C-Atomen, insbesondere für Methyl oder tert-Butyl.

Bevorzugte Verbindungen gemäß Formel (3) sind solche, in denen der Index z für 1 bis 10 steht, besonders bevorzugt für 2 bis 4. Bevorzugte Verbindungen gemäß Formel (3) sind weiterhin solche, in denen der Index y für 0 bis 10 steht, besonders bevorzugt für 0 bis 3 steht.

Bevorzugte Verbindungen gemäß Formel (4) sind solche, in denen der Index z für 0 bis 10 steht, besonders bevorzugt für 0 bis 3. Bevorzugte Verbindungen gemäß Formel (4) sind weiterhin solche, in denen der Index y für 0 bis 10 steht, besonders bevorzugt für 0 bis 3, ganz besonders bevorzugt für 0.

Bei den Indizes z und y muss es sich nicht um ganze Zahlen handeln, da die Edukte auch nicht-stöchiometrische Mengen Wasser und HHal, also Halogenwasserstoff, enthalten können. Gerade der Wasseranteil kann je nach Charge schwanken, da es sich um hygroskopische Metallsalze handelt. Der Anteil von Wasser im Edukt hat jedoch keinen Einfluss auf die Reaktion, da die Reaktion in wässrigem Medium durchgeführt wird.

Bevorzugte Verbindungen der Formeln (3), (4), (7) und (8) sind weiterhin solche, in denen das Symbol Hal, gleich oder verschieden bei jedem Auftreten, für Cl oder Br, besonders bevorzugt für Cl steht.

Das Verfahren wird erfindungsgemäß in wässrigem Medium in Gegenwart eines Tensids durchgeführt. Tenside sind dem Fachmann generell bekannt und sind Substanzen, die die Oberflächenspannung einer Flüssigkeit oder die Grenzflächenspannung zwischen zwei Phasen herabsetzen und die Bildung von Emulsionen ermöglichen oder unterstützen bzw. als Lösungsvermittler wirken bzw. die Micellen bilden. Generell sind Tenside amphiphile (bifunktionelle) Verbindungen mit mindestens einem hydrophoben und einem hydrophilen Molekülteil. Dabei ist der hydrophobe Rest bevorzugt eine Kohlenwasserstoffkette, insbesondere mit 8 bis 22 Kohlenstoffatomen, oder ein Alkylether, beispielsweise ein Alkylpolyethylenglycolether. Der hydrophile Rest ist entweder eine negativ oder positiv geladene oder eine neutrale polare Kopfgruppe.

Erfindungsgemäß werden anionische Tenside verwendet, insbesondere Alkylcarboxylate, Alkoholethercarboxylate, Alkylbenzolsulfonate, Alkylsulfonate, Alkylethersulfate und/oder Alkoholsulfate.

Alkylcarboxylate weisen die allgemeine Formel R'-COO⁻ auf, wobei R' für einen gesättigten oder ungesättigten Alkylrest mit 5 bis 25 C-Atomen steht. Alkoholethercarboxylate weisen die allgemeine Formel CₙH₂ₙ₊₁-(O-C₂H₄)ₘ-COO⁻ auf, wobei n bevorzugt für eine ganze Zahl von 5 bis 25 steht und m bevorzugt für eine ganze Zahl von 5 bis 25 steht. Alkylbenzolsulfonate weisen die allgemeine Formel CₙH₂ₙ₊₁-C₆H₅-SO₃⁻ auf, wobei n bevorzugt für eine ganze Zahl von 5 bis 25 steht. Alkylsulfonate weisen die allgemeine Formel CₙH₂ₙ₊₁-SO₃⁻ auf, wobei n bevorzugt für eine ganze Zahl von 5 bis 25 steht, bevorzugt für 8 bis 20, besonders bevorzugt für 10 bis 13. Alkylethersulfate weisen die allgemeine Formel CₙH₂ₙ₊₁-(O-C₂H₄)ₘ-O-SO₃⁻ auf, wobei n bevorzugt für eine ganze Zahl von 5 bis 25 steht und m bevorzugt für eine ganze Zahl von 5 bis 25 steht, bevorzugt von 10 bis 16, besonders bevorzugt von 11 bis 14. Alkoholsulfate weisen die allgemeine Formel CₙH₂ₙ₊₁-O-SO₃⁻ auf, wobei n bevorzugt für eine ganze Zahl von 5 bis 25 steht, bevorzugt von 10 bis 16, besonders bevorzugt von 12 bis 14.

Dabei enthalten die anionischen Tenside bevorzugt als Gegenionen Alkali-, Erdalkali-, Ammonium-, Tetraalkylammonium-, Tetraalkylphosphonium- und/oder Tetraarylphosphoniumkationen. Unter Alkalikationen sind Lithium-, Natrium-, Kalium-, Rubidium- und Caesiumkationen zu verstehen, bevorzugt Natrium- und Kaliumkationen. Unter Tetraalkylammoniumkationen sind bevorzugt solche mit insgesamt 4 bis 40 C-Atomen, bevorzugt 4 bis 20 C-Atomen, insbesondere Tetramethylammonium, Tetraethylammonium, Tetrapropylammonium und Tetrabutylammonium, zu verstehen. Unter Tetraalkylphosphoniumkationen sind bevorzugt solche mit insgesamt 4 bis 40 C-Atomen, insbesondere Tetramethylphosphonium, Tetraethylphosphonium, Tetrapropylphosphonium und Tetrabutylphosphonium, zu verstehen. Unter Tetraarylphosphoniumkationen sind bevorzugt solche mit insgesamt 20 bis 40 C-Atomen, bevorzugt 24 bis 30 C-Atomen, insbesondere Tetraphenylphosphonium und Tetratolylphosphonium, zu verstehen. Bevorzugt sind Natrium-, Kalium-, Ammonium- und/oder Tetraalkylammoniumkationen, wobei die Alkylgruppen gleich oder verschieden bei jedem Auftreten 1 bis 4 C-Atome aufweisen. Alternativ können als Tenside anstelle der Carboxylate, Sulfonate und Sulfate auch die entsprechenden korrespondierenden Säuren der Tenside und eine entsprechende Menge an Base eingesetzt werden.

Besonders bevorzugt werden als Tenside lineare Alkylbenzolsulfonate, lineare Alkylpolyethylenglycolether-sulfate oder Mischungen enthaltend Alkylbenzolsulfonate und/oder lineare Alkylpolyethylenglycolethersulfate eingesetzt. Ganz besonders bevorzugte Alkylbenzolsulfonate sind n-C₁₀-C₁₃-Alkylbenzolsulfonate, wie z. B. Marlon A375, Marlon ARL, Marlopon AT50 oder Marlon AS3 von Sasol, und ganz besonders bevorzugte Alkylpolyethylenglycolethersulfate sind n-C₁₂-C₁₄-Alkylpolyethylenglycolethersulfate, wie z. B. Marlinat 242/70 C oder Marlinat 242/90 M von Sasol.

Das bevorzugte Gewichtsverhältnis von Iridiumsalz zu Tensid beträgt 1 : 0.05 bis 1 : 5, besonders bevorzugt 1 : 0.1 bis 1 : 1, ganz besonders bevorzugt 1 : 0.2 bis 1 : 0.5.

In einer Ausführungsform der Erfindung wird das Verfahren in Anwesenheit eines Additivs durchgeführt. Dabei ist das Additiv bevorzugt ausgewählt aus der Gruppe bestehend aus Basen, insbesondere Brönstedt-Basen, und anorganischen Salzen.

Wenn das erfindungsgemäße Verfahren in Anwesenheit einer Base durchgeführt wird, kann die verwendete Base organisch oder anorganisch sein. Eine Base im Sinne der vorliegenden Erfindung ist jede Verbindung, die in wässriger Lösung in der Lage ist, Hydroxidionen zu bilden und so den pH-Wert der Lösung zu erhöhen. Die Aufgabe der Base im erfindungsgemäßen Verfahren liegt unter anderem darin, die bei der Cyclometallierungsreaktion freigesetzte Säure, beispielsweise HHal, abzufangen. Abhängig von der verwendeten Base wird jedoch auch ein unterschiedliches Verhältnis von facialem zu meridionalem Iridiumkomplex beobachtet, so dass die Base auch einen Einfluss auf die Komplexierungsreaktion selber hat.

In einer bevorzugten Ausführungsform der Erfindung wird eine Base eingesetzt, die im verwendeten Konzentrationsbereich mit Wasser vollständig mischbar ist bzw. sich im verwendeten Konzentrationsbereich in Wasser vollständig löst.

In einer Ausführungsform der Erfindung wird eine organische Base verwendet. Geeignete organische Basen sind Trialkylamine, wobei die Alkylgruppen bevorzugt gleich oder verschieden 1 bis 5 C-Atome aufweisen, Pyridinderivate oder Salze, insbesondere Alkalisalze, von Carbonsäuren, wobei die Carbonsäure bevorzugt 1 bis 5 C-Atome, insbesondere 1, 2 oder 3 C-Atome aufweist, beispielsweise Kaliumacetat. In einer bevorzugten Ausführungsform der Erfindung wird als organische Base ein Pyridinderivat eingesetzt, insbesondere unsubstituiertes Pyridin oder ein einfach oder mehrfach Alkyl-substituiertes Pyridinderivat. Besonders bevorzugt sind 2-Alkyl-substituierte Pyridine und 2,6-Dialkyl-substituierte Pyridine, wobei die Alkylgruppen gleich oder verschieden bevorzugt 1 bis 10 C-Atomen, besonders bevorzugt 1 bis 4 C-Atome aufweisen. Ganz besonders bevorzugt ist 2,6-Lutidin (2,6-Dimethylpyridin), da hiermit die beste Ausbeute insgesamt und insbesondere die beste Ausbeute des facialen Isomers erhalten wird.

In einer weiteren Ausführungsform der Erfindung wird eine anorganische Base verwendet. Geeignete anorganische Basen sind Salze von Hydroxid, Phosphat, Hydrogenphosphat oder Sulfit, wobei als Gegenionen bevorzugt Alkaliionen, insbesondere Na oder K, eingesetzt werden. Beispiele für geeignete anorganische Basen sind NaOH, KOH, Na₂SO₃, K₃PO₄ oder Na₂HPO₄.

Da es eine Aufgabe der zugesetzten Base ist, die bei der Komplexierungsreaktion entstehende Säure abzufangen, wird die Base bevorzugt näherungsweise stöchiometrisch oder überstöchiometrisch, bezogen auf den eingesetzten Liganden, verwendet. So wird im erfindungsgemäßen Verfahren bei Zusatz einer Base das Verhältnis von Ligand zu Base bevorzugt in der Größenordnung von 1 : 0.5 bis 1 : 5, besonders bevorzugt von 1 : 0.7 bis 1 : 3 und ganz besonders bevorzugt von 1 : 1 bis 1 : 1.5 gewählt. Dieses Verhältnis ist auch bevorzugt, wenn statt einer Base oder zusätzlich zu einer Base ein anorganisches Salz zugesetzt wird. Das Verhältnis von Ligand zu Base bei Verwendung eines tripodalen, hexadentaten Liganden ist bevorzugt in der Größenordnung von 1 : 1.5 bis 1 : 15, besonders bevorzugt von 1 : 2 bis 1 : 9 und ganz besonders bevorzugt von 1 : 3 bis 1 : 5.

Wenn das erfindungsgemäße Verfahren in Anwesenheit eines anorganischen Salzes durchgeführt wird, eignen sich insbesondere Salze von Chlorid, Bromid, lodid, Hydrogensulfat oder Sulfat, wobei als Gegenionen bevorzugt Alkaliionen oder auch Erdalkaliionen eingesetzt werden. Beispiele für geeignete anorganische Salze sind NaCl, KCl, KI, CaCl₂, NaHSO₄ oder Na₂SO₄.

Die Reaktion wird erfindungsgemäß in wässrigem Medium durchgeführt, wobei die Reaktion üblicherweise in einem mehrphasigen Gemisch von Suspensionen abläuft. Das Produkt fällt dabei im Allgemeinen aus dem Reaktionsgemisch aus. Als Lösemittel kann im erfindungsgemäßen Verfahren Wasser oder eine Mischung aus Wasser mit einem oder mehreren organischen Lösemitteln eingesetzt werden. Wenn eine Mischung aus Wasser mit einem oder mehreren organischen Lösemitteln verwendet wird, werden bevorzugt solche organischen Lösemittel verwendet, welche mit Wasser mischbar sind, insbesondere solche, welche in beliebigem Verhältnis mit Wasser mischbar sind. Dies sind insbesondere polar protische und polar aprotische Lösemittel.

Geeignete polar protische Lösemittel sind Alkohole, insbesondere Alkohole mit 1 bis 5 C-Atomen, beispielsweise Methanol, Ethanol, n-Propanol, iso-Propanol, n-Butanol, iso-Butanol oder tert-Butanol, oder auch Diole oder Polyalkohole, beispielsweise Ethylenglycol, Propylenglycol, Glycerin, Polyethylenglycole, beispielsweise PEG600 und PEG1000, sowie Alkoxyalkohole, beispielsweise Methoxyethanol oder Ethoxyethanol. Geeignete polar aprotische Lösemittel sind wassermischbare offenkettige Ether, beispielsweise Triethylenglycoldimethylether, Poly(ethylenglycol)dimethylether, wassermischbare cyclische Ether, wie Dioxan oder THF, sowie DMSO, NMP und DMF.

Wenn im erfindungsgemäßen Verfahren ein organisches Lösemittel verwendet wird, so ist dieses bevorzugt ein polar aprotisches Lösemittel, besonders bevorzugt ein cyclischer wassermischbarer Ether, insbesondere Dioxan.

Es ist bevorzugt, wenn der Anteil von Wasser im Reaktionsmedium mindestens 80 Vol.-% beträgt, besonders bevorzugt mindestens 90 Vol.-%, ganz besonders bevorzugt mindestens 95 Vol.-% und insbesondere bevorzugt mindestens 99 Vol.-%. Am meisten bevorzugt ist die Verwendung von Wasser ohne Zusatz eines organischen Lösemittels als Reaktionsmedium.

Das verwendete Wasser ist bevorzugt destilliertes Wasser oder VE-Wasser (deionisiertes Wasser) mit einem pH von 5 bis 9, bevorzugt von 6 bis 8 und besonders bevorzugt mit einem pH von 6.8 bis 7.2, insbesondere mit einem pH = 7.

Die Umsetzung wird bevorzugt in einem Temperaturbereich von 80 bis 250 °C durchgeführt, besonders bevorzugt von 100 bis 200 °C, ganz besonders bevorzugt von 120 bis 170 °C und insbesondere bevorzugt von 130 bis 160 °C, wobei es sich bei der Temperatur um die Manteltemperatur des Reaktionsgefäßes handelt.

In einer bevorzugten Ausführungsform wird die Reaktion in einem geschlossenen System, beispielsweise in einer geschlossenen Ampulle, unter Rückfluss durchgeführt. Dabei wird die Reaktion bevorzugt unter einem Schutzgas, beispielsweise Stickstoff oder Argon, durchgeführt. Dabei entspricht der Druck dem Dampfdruck über der Lösung. Die Reaktion kann auch unter erhöhtem Druck, beispielsweise im Autoklaven, durchgeführt werden.

Die Konzentration des Iridiums im Reaktionsmedium liegt bevorzugt im Bereich von 1 bis 300 mmol/l, besonders bevorzugt im Bereich von 10 bis 250 mmol/l, ganz besonders bevorzugt im Bereich von 100 bis 200 mmol/l.

Das bevorzugte molare Verhältnis von Iridium zum eingesetzten Liganden im Reaktionsmedium ist abhängig vom verwendeten Iridiumedukt sowie vom verwendeten Liganden. So wird bevorzugt ein Verhältnis der Iridium-Verbindung gemäß Formel (3) bzw. Formel (4) bzw. Formel (5) bzw. Formel (6) zum Liganden gemäß Formel (2) von 1:1 bis 1:20 eingesetzt, besonders bevorzugt 1:3 bis 1:15, ganz besonders bevorzugt 1:10 bis 1:13, wenn es sich um bidentate Liganden handelt. Das bevorzugte molare Verhältnis der Iridium-Verbindung gemäß Formel (7) zum Liganden gemäß Formel (2) beträgt 1:1 bis 1:20, besonders bevorzugt 1:2 bis 1:10, ganz besonders bevorzugt 1:3 bis 1:5, wenn es sich um bidentate Liganden handelt. Bei Verwendung eines polypodalen, hexadentaten Liganden ist ein Verhältnis von Ir zum Liganden von 1 : 0.9 bis 1 : 1 bevorzugt, insbesondere ein Verhältnis von 1 : 1 bis 1 : 1.05.

Da der Ligand bei Einsatz bidentater Liganden üblicherweise im Überschuss eingesetzt wird, kann es insbesondere bei aufwändig synthetisierbaren Liganden sinnvoll sein, diesen nach der Reaktion wiederzugewinnen. Dies kann beispielsweise durch Extraktion der Mutterlauge mit einem nicht wassermischbaren Lösemittel erfolgen.

Die Reaktion wird bevorzugt innerhalb von 1 bis 1000 h durchgeführt, besonders bevorzugt innerhalb von 5 bis 500 h, ganz besonders bevorzugt innerhalb von 10 bis 200 h.

Eine weitere Beschleunigung der Reaktion kann beispielsweise unter Einsatz von Mikrowellenstrahlung erreicht werden. Wie Cyclometallierungsreaktionen allgemein in der Mikrowelle durchgeführt werden können, ist beispielsweise in WO 2004/108738 beschrieben.

Die Aufarbeitung der Reaktionsmischung ist im erfindungsgemäßen Verfahren einfach, da die cyclometallierte Iridiumverbindung bei der Reaktion üblicherweise zumindest teilweise oder vollständig ausfällt. Dies kann durch Ausfällen mit einem Lösemittel, in dem die Iridiumverbindung unlöslich ist, beispielsweise mit einem Alkohol, z. B. Ethanol, oder einer Mischung aus einem Alkohol und Wasser vervollständigt werden. Das Produkt kann dann durch Filtration und Waschen mit einem Lösemittel, in dem es unlöslich ist, beispielsweise mit Wasser, einem Alkohol, z. B. Ethanol, oder einer Mischung aus einem Alkohol und Wasser isoliert und gereinigt werden. Falls erforderlich, kann eine weitere Aufreinigung durch die allgemein für derartige Iridiumkomplexe üblichen Methoden erfolgen, wie beispielsweise Umkristallisation, Chromatographie, Heißextraktion und/oder Sublimation.

Das erfindungsgemäße Verfahren bietet die folgenden Vorteile gegenüber dem Stand der Technik:
1. Das erfindungsgemäße Verfahren ermöglicht einen Zugang zu tris-cyclometallierten Iridiumkomplexen aus einfach zugänglichem Iridiumhalogenid in einem Schritt und in sehr guter Ausbeute, während viele Verfahren gemäß dem Stand der Technik von aufwändigeren Edukten, beispielsweise Iridiumketoketonat-Komplexen oder chloro-verbrückten dimeren Iridiumkomplexen, ausgehen und/oder schlechtere Ausbeuten aufweisen.
2. Das erfindungsgemäße Verfahren erfordert nicht den Einsatz organischer Lösemittel, die im Allgemeinen brennbar und häufig toxisch sind und Probleme bei der Entsorgung mit sich bringen, da das Verfahren auch ohne Zusatz organischer Lösemittel durchgeführt werden kann und sogar ohne den Zusatz organischer Lösemittel zu den besten Ergebnissen führt. Es handelt sich somit um ein umweltfreundlicheres Verfahren im Vergleich zu den Verfahren gemäß dem Stand der Technik. Dies ist insbesondere im technischen Maßstab von Interesse.
3. Bei Verfahren gemäß dem Stand der Technik werden häufig Nebenreaktionen des eingesetzten organischen Lösemittels mit dem Liganden beobachtet, welche möglicherweise unter Katalyse durch das Iridium in der Reaktionsmischung stattfinden. Auch wenn diese Nebenreaktionen nur in geringem Ausmaß stattfinden, verunreinigen die Nebenprodukte das Reaktionsprodukt. Da aber für die Verwendung in organischen Elektrolumineszenzvorrichtungen hochreine Iridiumverbindungen erforderlich sind, führt diese Nebenreaktion zu einem erhöhten Aufwand bei der Aufreinigung der Komplexe. Diese Nebenreaktion wird im vorliegenden Verfahren bei der Verwendung von Wasser als Lösemittel nicht beobachtet.

Die vorliegende Erfindung wird durch die nachfolgenden Beispiele näher erläutert, ohne diese auf die Beispiele einschränken zu wollen. Dem Fachmann auf dem Gebiet der organischen und metallorganischen Synthese ist es ohne weitere erfinderische Tätigkeit möglich, die erfindungsgemäßen Umsetzungen an weiteren Systemen durchzuführen. Insbesondere kann das Verfahren ohne weitere erfinderische Tätigkeit an unterschiedlich substituierten Systemen durchgeführt werden oder auch an Systemen, welche statt Phenyl oder Pyridin andere Aryl- oder Heteroarylgruppen als koordinierende Gruppen enthalten. Ebenso kann er das erfindungsgemäße Verfahren unter Zusatz anderer Basen und/oder Salze oder anderer Lösemittel durchführen.

### Beispiele

Die nachfolgenden Synthesen werden, sofern nicht anders angegeben, unter einer Schutzgasatmosphäre durchgeführt. Iridium(III)chlorid Hydrat kann von der Firma Heraeus bezogen werden und entspricht nach Iridium- und Wassergehaltsbestimmung der Formel IrCl₃ · H₂O. 2-Phenylpyridin und die substituierten 2-Phenylpyridine bzw. die anderen Liganden können von der Firma Aldrich bzw. der Firma ABCR bezogen bzw. nach gängigen Literaturvorschriften dargestellt werden. Die Tenside, die nicht bei Aldrich bzw. ABCR verfügbar sind, können von der Firma Sasol bezogen werden.

### Beispiel 1: Allgemeine Reaktionsdurchführung

In eine 750 mL Druck-Rührwerksapparatur mit PTFE-Inliner werden bei Raumtemperatur 30.05 g IrCl₃ · H₂O, 30.16 g 2,6-Lutidin, 160.0 g 2-Phenylpyridin, 10.05 g Marlon A375 und 268.0 g VE-Wasser zugegeben. Das Reaktionsgefäß wird kurz mit N₂ gespült, verschlossen, auf eine Manteltemperatur T_{M} = 150 °C erhitzt und für 161 h mit niedriger Drehzahl gerührt. Anschließend wird die Suspension auf Raumtemperatur abgekühlt und mit 125 mL VE-Wasser und 375 mL Ethanol versetzt. Nach 30-minütigem Rühren wird der Feststoff abgesaugt, mit 5x100 mL VE-Wasser und 5x100 mL Ethanol nachgewaschen und trocken gesaugt. Der Feststoff wird für 60 h bei 40 °C im Vakuum getrocknet. Es werden 52.14 g (92.0 % d.Th.) gelber Feststoff mit einem Anteil von >99.6 % fac-IrPPy erhalten. Falls erforderlich, kann eine weitere Aufreinigung durch Umkristallisation, Chromatographie, Heißextraktion und/oder Sublimation erfolgen. Nach 170 h Reaktionszeit ist kein mer-Anteil analytisch mehr zu sehen.

### Beispiel 2: Variation des Anteils der Base, des Anteils des Tensids und des Anteils des Liganden

Das unter Beispiel 1 beschriebene Verfahren wird analog unter Einsatz unterschiedlicher Anteile der Base, des Tensids und des Liganden durchgeführt. Die Reaktionsdauer beträgt 20-24 h. Dabei werden die folgenden Ergebnisse erzielt:

| Beispiel | Anteil Ligand* | Anteil Base* | % Tensid** | % Ausbeute | % facial |
|---|---|---|---|---|---|
| 2a | 12 | 3:5 | 33 | 92 | 99.6 |
| 2b | 9 | 6 | 60 | 85 | 96.9 |
| 2c | 8 | 7.5 | 33 | 82 | 96.5 |
| 2d | 3.5 | 8 | 33 | 85 | 96 |
| 2e | 9 | 1 | 20 | 85 | 98 |
| 2f | 3.5 | 16 | 33 | 76 | 82 |
| 2q | 6 | 3.5 | 60 | 85 | 94 |
| 2h | 8 | 3.5 | 6 | 82 | 89 |
| 2i | 6 | 3.5 | 22 | 90 | 91 |
| 2j | 12 | 3.5 | 22 | 90 | 93 |
| 2k | 9 | 1 | 6 | 86 | 83 |

| | | | | | |
|---|---|---|---|---|---|
| * Der Anteil Ligand und der Anteil Base bezieht sich auf die Äquivalente im Verhältnis zum Iridium-Edukt. ** Der Anteil Tensid bezieht sich auf Gewichtsprozent IrCl₃ · H₂O. | | | | | |

Wie man erkennen kann, ist der cyclometallierte Iridiumkomplex durch das erfindungsgemäße Verfahren in sehr guten Ausbeuten und mit einem hohen Anteil des facialen Isomers erhältlich.

### Beispiel 3: Variation des Tensids

Das unter Beispiel 1 beschriebene Verfahren wird analog unter Einsatz eines anderen Tensids bzw. Tensidgemischs durchgeführt. Die Reaktionsdauer beträgt 20-24 h. Dabei werden die folgenden Ergebnisse erzielt:

| Beispiel | Tensid(gemisch) | 2,6-Lutidin* | % Ausbeute | % facial |
|---|---|---|---|---|
| 3a | Extran MA02 | + | 85 | 88 |
| 3b | Extran MA02 | - | 83 | 44 |
| 3c | Marlipal SU | + | 71 | 27 |
| 3d | Marlipal SU | - | 78 | 23 |
| 3e | Marlon A375 | + | 85 | 92 |
| 3f | Marlon A375 | - | 76 | 48 |
| 3g | Marlopon AT50 | + | 88 | 92 |
| 3h | Marlopon AT50 | - | 74 | 40 |
| 3i | Na-Polyphosphat | + | 71 | 29 |
| 3j | Na-Polyphosphat | - | 76 | 29 |
| 3k | Kathon | + | 68 | 25 |
| 3l | Kathon | - | 84 | 20 |
| 3m | Marlon AS3 | + | 84 | 90 |
| 3n | Marlon AS3 | - | 75 | 42 |
| 3o | Marlon ARL | + | 75 | 87 |
| 3p | Marlon ARL | - | 84 | 51 |
| 3q | Marlinat 242/70C | + | 84 | 94 |
| 3r | Marlinat 242/70C | - | 71 | 33 |
| 3s | Marlinat 242/90M | + | 85 | 86 |
| 3t | Marlinat 242/90M | - | 74 | 34 |
| 3u | Marlowet 4539LF | + | 86 | 58 |
| 3v | Marlowet 4539LF | - | 73 | 24 |
| 3w | Marlowet 4570LF | + | 73 | 36 |
| 3x | Marlowet 4570LF | - | 72 | 24 |
| 3y | KNA Cum sulph | + | 76 | 53 |
| 3z | KNA Cum sulph | - | 73 | 38 |
| 3aa | NA Cum sulph | + | 80 | 48 |
| 3ab | NA Cum sulph | - | 78 | 27 |

| | | | | |
|---|---|---|---|---|
| * + bedeutet Zusatz von Lutidin, - bedeutet ohne Zusatz von Lutidin. | | | | |

### Beispiel 4: Variation des Liganden

Das unter Beispiel 1 beschriebene Verfahren wird analog unter Einsatz unterschiedlicher Liganden durchgeführt. In allen Fällen bildet sich der entsprechende homoleptische Iridiumkomplex, wie in der nachfolgenden Tabelle aufgeführt:

| Beispiel | Struktur Ligand | Struktur Komplex |
|---|---|---|
| 4a | 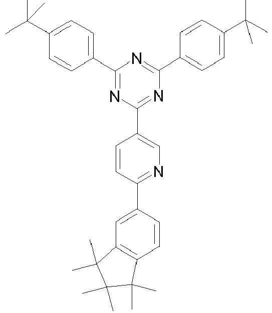 | 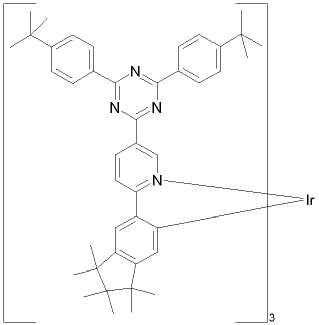 |
| 4b | 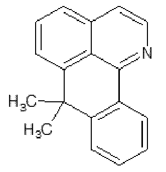 | 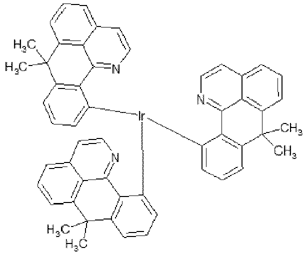 |
| | (WO 2005/03324) | |
| 4c | 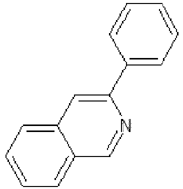 | 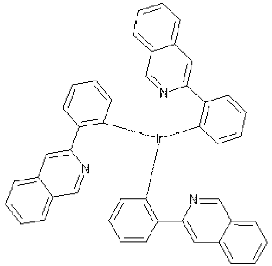 |
| 4d | 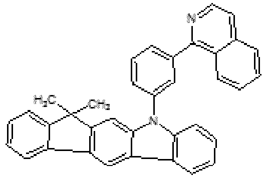 | 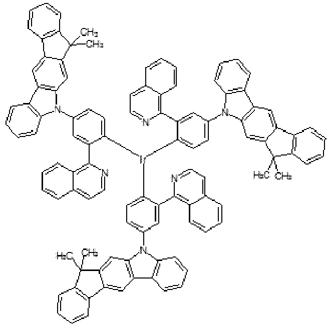 |

### Beispiel 5: Verwendung eines tripodalen hexadentaten Liganden

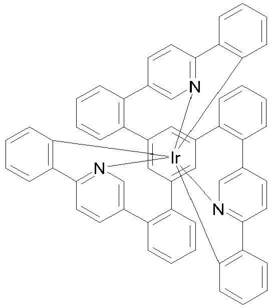

In einem 100 mL Druckschlenkrohr mit Magnetrührkern werden bei Raumtemperatur 3.2 g IrCl₃ · H₂O, 3.3 g 2,6-Lutidin, 7.7 g 5-[2-[3,5-bis[2-(6-phenyl-3-pyridyl)phenyl]phenyl]phenyl]-2-phenylpyridin [1989598-11-9], 1.0 g Marlon A375 und 50 ml VE-Wasser vorgelegt. Das Reaktionsgefäß wird kurz mit N₂ gespült, verschlossen und unter Rühren 16 h auf T_{M} = 150 °C erhitzt. Anschließend wird die Suspension auf Raumtemperatur abgekühlt und mit 40 mL Ethanol versetzt. Nach 30-minütigem Rühren wird der gelbe Feststoff abgesaugt, mit 5x25 mL VE-Wasser und 5x25 mL Ethanol nachgewaschen und trocken gesaugt. Der Feststoff wird für 20 h bei 80 °C im Vakuum getrocknet. Es werden 9.4 g (98 % d.Th.) eines gelben Feststoff erhalten. Falls erforderlich, kann eine weitere Aufreinigung durch Umkristallisation, Heißextraktion, Chromatographie oder Sublimation erfolgen.

Analog können folgende Verbindungen dargestellt werden:

| Bsp. | Edukt (CAS-Nummer) | Produkt | Ausbeute |
|---|---|---|---|
| 5a | 1989599-76-9 | 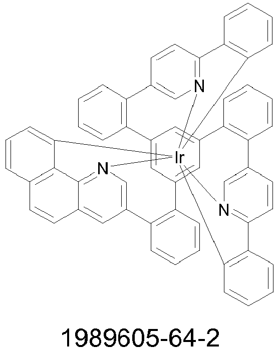 | 97 % |
| 5b | 1989600-01-2 | 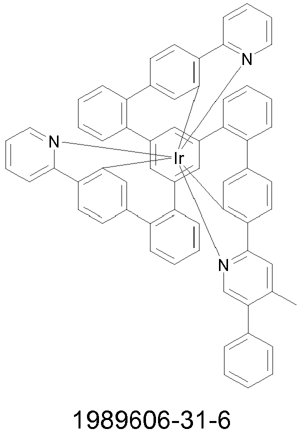 | 97 % |

## Patentansprüche

1. Verfahren zur Herstellung eines tris-cyclometallierten Iridiumkomplexes durch Umsetzung einer Iridiumverbindung mit einem bidentaten Liganden oder mit einem hexadentaten tripodalen Liganden, welcher drei bidentate Teilliganden aufweist, wobei die bidentaten Liganden bzw. die bidentaten Teilliganden unter Cyclometallierung an das Iridium koordinieren, **dadurch gekennzeichnet, dass** das Verfahren in wässrigem Medium unter Zusatz eines anionischen Tensids durchgeführt wird, wobei das anionische Tensid ausgewählt ist aus der Gruppe bestehend aus Alkylcarboxylaten der Formel R'-COO⁻, wobei R' für einen gesättigten oder ungesättigten Alkylrest mit 5 bis 25 C-Atomen steht, Alkoholethercarboxylaten der Formel CₙH₂ₙ₊₁-(O-C₂H₄)ₘ-COO⁻, wobei n für eine ganze Zahl von 5 bis 25 steht und m für eine ganze Zahl von 5 bis 25 steht, Alkylbenzolsulfonaten der Formel CₙH₂ₙ₊₁-C₆H₅-SO₃⁻, wobei n für eine ganze Zahl von 5 bis 25 steht, Alkylsulfonaten der Formel CₙH₂ₙ₊₁-SO₃⁻, wobei n für eine ganze Zahl von 5 bis 25 steht, Alkylethersulfaten der Formel CₙH₂ₙ₊₁-(O-C₂H₄)ₘ-O-SO₃⁻, wobei n für eine ganze Zahl von 5 bis 25 steht und m für eine ganze Zahl von 5 bis 25 steht, und/oder Alkoholsulfaten der Formel CₙH₂ₙ₊₁-O-SO₃⁻, wobei n für eine ganze Zahl von 5 bis 25 steht.

2. Verfahren nach Anspruch 1, **dadurch gekennzeichnet, dass** der tris-cyclometallierte Iridiumkomplex, wenn er drei bidentate Liganden aufweist, ein homoleptischer Komplex ist.

3. Verfahren nach Anspruch 1 oder 2, **dadurch gekennzeichnet, dass** der tris-cyclometallierte Iridiumkomplex eine faciale Geometrie aufweist.

4. Verfahren nach einem oder mehreren der Ansprüche 1 bis 3, **dadurch gekennzeichnet, dass** der tris-cyclometallierte Iridiumkomplex eine Struktur der folgenden Formel (1) aufweist, 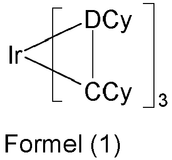 worin gilt:
DCy ist bei jedem Auftreten gleich oder verschieden eine Heteroarylgruppe mit 5 bis 14 aromatischen Ringatomen, die mindestens ein neutrales Donoratom, ausgewählt aus Stickstoff oder einem Carben-Kohlenstoffatom, enthält, über welches die Gruppe an das Iridium gebunden ist, und die durch einen oder mehrere Substituenten R substituiert sein kann;
CCy ist bei jedem Auftreten gleich oder verschieden eine Aryl- oder Heteroarylgruppe mit 5 bis 14 aromatischen Ringatomen, die ein Kohlenstoffatom enthält, über welches die Gruppe an das Iridium gebunden ist, und die einen oder mehrere Substituenten R tragen kann;
die Gruppen DCy und CCy sind über eine kovalente Bindung miteinander verbunden und können weiterhin über einen Rest R miteinander verbunden sein;
R ist bei jedem Auftreten gleich oder verschieden H, D, F, Cl, Br, I, NO₂, CN, OH, N(R¹)₂, OR¹, SR¹, B(OR¹)₂, CHO, COOH, CON(R¹)₂, C(=O)R¹, P(=O)(R¹)₂, S(=O)R¹, S(=O)₂R¹, Si(R¹)₃, eine geradkettige Alkylgruppe mit 1 bis 20 C-Atomen oder eine Alkenyl- oder Alkinylgruppe mit 2 bis 20 C-Atomen oder eine verzweigte oder cyclische Alkylgruppe mit 3 bis 20 C-Atomen, wobei die Alkyl-, Alkenyl- oder Alkinylgruppe jeweils mit einem oder mehreren Resten R¹ substituiert sein kann und/oder wobei ein oder mehrere nicht benachbarte CH₂-Gruppen durch O, S, NR¹, CONR¹ oder CO-O ersetzt sein können, oder ein aromatisches oder heteroaromatisches Ringsystem mit 5 bis 40 aromatischen Ringatomen, das durch einen oder mehrere Reste R¹ substituiert sein kann; dabei können zwei oder mehrere Substituenten R, sowohl am selben Ring CCy bzw. DCy als auch an den beiden unterschiedlichen Ringen CCy und DCy zusammen, miteinander oder mit R¹ ein weiteres Ringsystem aufspannen;
R¹ ist bei jedem Auftreten gleich oder verschieden H, D, F, Cl, Br, I, N(R²)₂, OR², SR², CN, NO₂, Si(R²)₃, B(OR²)₂, C(=O)R², P(=O)(R²)₂, S(=O)R², S(=O)₂R², OSO₂R², eine geradkettige Alkylgruppe mit 1 bis 20 C-Atomen oder eine Alkenyl- oder Alkinylgruppe mit 2 bis 20 C-Atomen oder eine verzweigte oder cyclische Alkylgruppe mit 3 bis 20 C-Atomen, wobei die Alkyl-, Alkenyl- oder Alkinylgruppe jeweils mit einem oder mehreren Resten R² substituiert sein kann und/oder wobei eine oder mehrere nicht benachbarte CH₂-Gruppen durch Si(R²)₂, C=O, NR², O, S oder CONR² ersetzt sein können, oder ein aromatisches oder heteroaromatisches Ringsystem mit 5 bis 40 aromatischen Ringatomen, das jeweils durch einen oder mehrere Reste R² substituiert sein kann; dabei können mehrere Substituenten R¹ auch miteinander ein Ringsystem bilden;
R² ist bei jedem Auftreten gleich oder verschieden H, D, F oder ein aliphatischer, aromatischer und/oder heteroaromatischer organischer Rest, insbesondere ein Kohlenwasserstoffrest, mit 1 bis 20 C-Atomen, in dem auch ein oder mehrere H-Atome durch F ersetzt sein können;
dabei können auch zwei Liganden CCy-DCy über Reste R miteinander zu einem tetradentaten Liganden oder alle drei Liganden CCy-DCy über Reste R miteinander zu tripodalen hexadentaten Liganden verknüpft sein.

5. Verfahren nach einem oder mehreren der Ansprüche 1 bis 4, **dadurch gekennzeichnet, dass** als bidentater Liganden eine Verbindung der folgenden Formel (2a) eingesetzt wird, 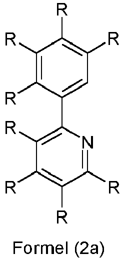 wobei R die in Anspruch 4 genannten Bedeutungen aufweist und mehrere Liganden über R auch zu einem tetradentaten Liganden oder zu einem tripodalen hexadentaten Liganden verknüpft sein können.

6. Verfahren nach einem oder mehreren der Ansprüche 1 bis 5, **dadurch gekennzeichnet, dass** als Iridiumverbindung eine Verbindung eingesetzt wird, die ausgewählt ist aus den folgenden Formeln (3) bis (8), IrHal₃ ^{∗} z H₂O ^{∗} y HHal A₃[IrHal₆] ^{∗} z H₂O ^{∗} y HHal Ir(OOCR)₃ Formel (3) Formel (4) Formel (5) 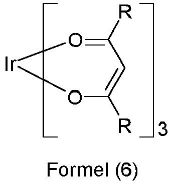 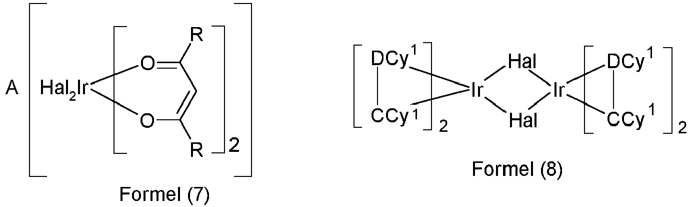 wobei R die in Anspruch 4 genannten Bedeutungen aufweist, CCy¹ gleich oder verschieden dieselben Bedeutungen aufweist wie CCy in Anspruch 4, DCy¹ gleich oder verschieden dieselben Bedeutungen aufweist wie DCy in Anspruch 4 und für die weiteren Symbole und Indizes gilt:
Hal ist bei jedem Auftreten gleich oder verschieden F, Cl, Br oder I;
A ist bei jedem Auftreten gleich oder verschieden ein Alkalimetallkation, ein Ammoniumkation, ein Tetraalkylammoniumkation mit 4 bis 40 C-Atomen oder ein Tetraalkylphosphoniumkation mit 4 bis 40 C-Atomen;
z ist 0 bis 100;
y ist 0 bis 100.

7. Verfahren nach einem oder mehreren der Ansprüche 1 bis 6, **dadurch gekennzeichnet, dass** das anionische Tensid als Gegenionen Alkali-, Erdalkali-, Ammonium-, Tetraalkylammonium-, Tetraalkylphosphonium- und/oder Tetraarylphosphoniumkationen enthält.

8. Verfahren nach einem oder mehreren der Ansprüche 1 bis 7, **dadurch gekennzeichnet, dass** als Tensid n-C₁₀-C₁₃-Alkylbenzolsulfonate, n-C₁₂-C₁₄-Alkylpolyethylenglycolethersulfate oder Mischungen daraus eingesetzt werden.

9. Verfahren nach einem oder mehreren der Ansprüche 1 bis 8, **dadurch gekennzeichnet, dass** das Verfahren in Anwesenheit eines Additivs durchgeführt wird, wobei das Additiv ausgewählt ist aus der Gruppe bestehend aus organischen Basen, anorganischen Basen und anorganischen Salzen.

10. Verfahren nach Anspruch 9, **dadurch gekennzeichnet, dass** das Additiv eine organische Base ist, die ausgewählt ist aus der Gruppe bestehend aus Trialkylaminen, Pyridinderivaten, insbesondere 2,6-Dialkylpyridinderivaten, oder Salzen von Carbonsäuren, oder dass das Additiv eine anorganische Base ist, die ausgewählt ist aus der Gruppe bestehend aus Salzen von Hydroxid, Phosphat, Hydrogenphosphat oder Sulfit, oder dass das Additiv ein anorganisches Salz ist, das ausgewählt ist aus der Gruppe bestehend aus Salzen von Chlorid, Bromid, lodid, Hydrogensulfat oder Sulfat.

11. Verfahren nach einem oder mehreren der Ansprüche 1 bis 10, **dadurch gekennzeichnet, dass** die Reaktion in Wasser oder einer Mischung aus Wasser mit einem oder mehreren polar protischen und/oder polar aprotischen Lösemitteln durchgeführt wird.

12. Verfahren nach einem oder mehreren der Ansprüche 1 bis 11, **dadurch gekennzeichnet, dass** als Reaktionsmedium Wasser ohne Zusatz von organischen Lösemitteln verwendet wird.

13. Verfahren nach einem oder mehreren der Ansprüche 1 bis 12, **dadurch gekennzeichnet, dass** die Umsetzung in einem Temperaturbereich von 80 bis 250 °C durchgeführt wird.

## Claims

1. Process for preparing a tris-cyclometalated iridium complex by reacting an iridium compound with a bidentate ligand or with a hexadentate tripodal ligand, which has three bidentate sub-ligands, wherein the bidentate ligands or the bidentate sub-ligands coordinate to the iridium with cyclometalation, **characterized in that** the process is carried out in aqueous medium with addition of a surfactant, wherein the anionic surfactant is selected from the group consisting of alkyl carboxylates of the formula R'-COO⁻, wherein R' is a saturated or unsaturated alkyl radical having 5 to 25 carbon atoms, alcohol ether carboxylates of the formula CₙH₂ₙ₊₁-(O-C₂H₄)ₘ-COO⁻, wherein n is an integer from 5 to 25 and m is an integer from 5 to 25, alkylbenzenesulfonates of the formula CₙH₂ₙ₊₁-C₆H₅-SO₃⁻, wherein n is an integer from 5 to 25, alkylsulfonates of the formula CₙH₂ₙ₊₁-SO₃⁻, wherein n is an integer from 5 to 25, alkyl ether sulfates of the formula CₙH₂ₙ₊₁-(O-C₂H₄)ₘ-O-SO₃⁻, wherein n is an integer from 5 to 25 and m is an integer from 5 to 25, and/or alcohol sulfates of the formula CₙH₂ₙ₊₁-O-SO₃⁻, wherein n is an integer from 5 to 25.

2. Process according to Claim 1, **characterized in that** the tris-cyclometalated iridium complex, when it has three bidentate ligands, is a homoleptic complex.

3. Process according to Claim 1 or 2, **characterized in that** the tris-cyclometalated iridium complex has facial geometry.

4. Process according to one or more of Claims 1 to 3, **characterized in that** the tris-cyclometalated iridium complex has a structure of the following formula (1), 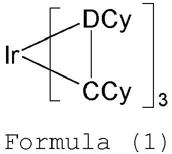 wherein:
DCy is the same or different at each instance and is a heteroaryl group having 5 to 14 aromatic ring atoms, which contains at least one neutral donor atom selected from nitrogen or a carbene carbon atom via which the group is bonded to the iridium, and which heteroaryl group can be substituted by one or more substituents R;
CCy is the same or different at each instance and is an aryl or heteroaryl group having 5 to 14 aromatic ring atoms, which contains a carbon atom via which the group is bonded to the iridium, and which aryl or heteroaryl group can bear one or more substituents R;
the groups DCy and CCy are connected to one another via a covalent bond and can furthermore be connected to one another via a radical R;
R is the same or different at each instance and is H, D, F, Cl, Br, I, NO₂, CN, OH, N(R¹)₂, OR¹, SR¹, B(OR¹)₂, CHO, COOH, CON(R¹)₂, C(=O)R¹, P(=O)(R¹)₂, S(=O)R¹, S(=O)₂R¹, Si(R¹)₃, a straight-chain alkyl group having 1 to 20 carbon atoms or an alkenyl or alkynyl group having 2 to 20 carbon atoms or a branched or cyclic alkyl group having 3 to 20 carbon atoms, wherein the alkyl, alkenyl or alkynyl group can in each case be substituted by one or more radicals R¹ and/or wherein one or more non-adjacent CH₂ groups may be replaced by 0, S, NR¹, CONR¹ or CO-O, or an aromatic or heteroaromatic ring system which has 5 to 40 aromatic ring atoms and may be substituted by one or more radicals R¹; in this case, two or more substituents R, both on the same ring CCy or DCy or else on the two different rings CCy and DCy together, may, with one another or with R¹, form a further ring system;
R¹ is the same or different at each instance and is H, D, F, Cl, Br, I, N(R²)₂, OR², SR², CN, NO₂, Si(R²)₃, B(OR²)₂, C(=O)R², P(=O)(R²)₂, S(=O)R², S(=O)₂R², OSO₂R², a straight-chain alkyl group having 1 to 20 carbon atoms or an alkenyl or alkynyl group having 2 to 20 carbon atoms or a branched or cyclic alkyl group having 3 to 20 carbon atoms, wherein the alkyl, alkenyl or alkynyl group may in each case be substituted by one or more R² radicals and/or wherein one or more non-adjacent CH₂ groups may be replaced by Si(R²)₂, C=O, NR², 0, S or CONR², or an aromatic or heteroaromatic ring system which has 5 to 40 aromatic ring atoms and may be substituted in each case by one or more radicals R²; in this case, a plurality of substituents R¹ may also form a ring system with one another;
R² is the same or different at each instance and is H, D, F or an aliphatic, aromatic and/or heteroaromatic organic radical, especially a hydrocarbyl radical, having 1 to 20 carbon atoms, in which one or more hydrogen atoms may also be replaced by F;
in this case, it is also possible for two CCy-DCy ligands to be joined to one another via radicals R to form a tetradentate ligand or all three CCy-DCy ligands to be joined to one another via radicals R to form tripodal hexadentate ligands.

5. Process according to one or more of Claims 1 to 4, **characterized in that** a compound of the following formula (2a) is used as bidentate ligand, 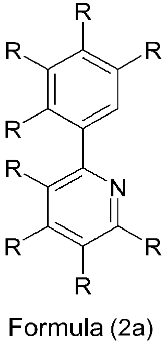 wherein R has the meanings given in Claim 4 and a plurality of ligands may also be joined via R to give a tetradentate ligand or a tripodal hexadentate ligand.

6. Process according to one or more of Claims 1 to 5, **characterized in that** the iridium compound used is a compound selected from the following formulae (3) to (8), IrHal₃ ^{∗} z H₂O ^{∗} y HHal A₃[IrHal₆] ^{∗} z H₂O ^{∗} y HHal Ir(OOCR)₃ Formula (3) Formula (4) Formula (5) 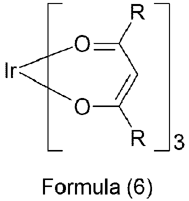 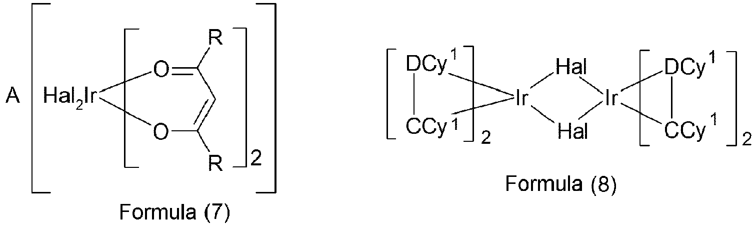 wherein R has the meanings given in Claim 4, CCy¹ is the same or different and has the same meanings as CCy in Claim 4, DCy¹ is the same or different and has the same meanings as DCy in Claim 4 and the following applies for the further symbols and indices:
Hal is the same or different at each instance and is F, Cl, Br or I;
A is the same or different at each instance and is an alkali metal cation, an ammonium cation, a tetraalkylammonium cation having 4 to 40 carbon atoms or a tetraalkylphosphonium cation having 4 to 40 carbon atoms;
z is 0 to 100;
y is 0 to 100.

7. Process according to one or more of Claims 1 to 6, **characterized in that** the anionic surfactant contains alkali metal, alkaline earth metal, ammonium, tetraalkylammonium, tetraalkylphosphonium and/or tetraarylphosphonium cations as counterions.

8. Process according to one or more of Claims 1 to 7, **characterized in that** n-C₁₀-C₁₃-alkylbenzenesulfonates, n-C₁₂-C₁₄-alkyl polyethylene glycol ether sulfates or mixtures thereof are used as surfactant.

9. Process according to one or more of Claims 1 to 8, **characterized in that** the method is carried out in the presence of an additive, wherein the additive is selected from the group consisting of organic bases, inorganic bases and inorganic salts.

10. Process according to Claim 9, **characterized in that** the additive is an organic base selected from the group consisting of trialkylamines, pyridine derivatives, especially 2,6-dialkylpyridine derivatives, or salts of carboxylic acids, or **in that** the additive is an inorganic base selected from the group consisting of salts of hydroxide, phosphate, hydrogenphosphate or sulfite, or **in that** the additive is an inorganic salt selected from the group consisting of salts of chloride, bromide, iodide, hydrogensulfate or sulfate.

11. Process according to one or more of Claims 1 to 10, **characterized in that** the reaction is carried out in water or a mixture of water and one or more polar protic and/or polar aprotic solvents.

12. Process according to one or more of Claims 1 to 11, **characterized in that** water is used as reaction medium without the addition of organic solvents.

13. Process according to one or more of Claims 1 to 12, **characterized in that** the reaction is carried out in a temperature range from 80 to 250°C.

## Revendications

1. Procédé de fabrication d'un complexe d'iridium tris-cyclométallé par mise en réaction d'un composé d'iridium avec un ligand bidentate ou avec un ligand tripodal hexadentate, qui comprend trois ligands partiels bidentates, les ligands bidentates ou les ligands partiels bidentates étant coordonnés à l'iridium avec cyclométallation, **caractérisé en ce que** le procédé est réalisé en milieu aqueux avec ajout d'un tensioactif anionique, le tensioactif anionique étant choisi dans le groupe constitué par les carboxylates d'alkyle de la formule R'-COO⁻, R' représentant un radical alkyle saturé ou insaturé de 5 à 25 atomes C, les alcool-éther-carboxylates de la formule CₙH₂ₙ₊₁-(OC₂H₄)ₘ-COO⁻, n représentant un nombre entier de 5 à 25 et m représentant un nombre entier de 5 à 25, les sulfonates d'alkylbenzène de la formule CₙH₂ₙ₊₁-C₆H₅-SO₃⁻, n représentant un nombre entier de 5 à 25, les sulfonates d'alkyle de la formule CₙH₂ₙ₊₁-SO₃⁻, n représentant un nombre entier de 5 à 25, les éthersulfates d'alkyle de la formule CₙH₂ₙ₊₁-(O-C₂H₄)ₘ-O-SO₃⁻, n représentant un nombre entier de 5 à 25 et m représentant un nombre entier de 5 à 25, et/ou les alcool-sulfates de la formule CₙH₂ₙ₊₁-O-SO₃⁻, n représentant un nombre entier de 5 à 25.

2. Procédé selon la revendication 1, **caractérisé en ce que** le complexe d'iridium tris-cyclométallé, lorsqu'il comprend trois ligands bidentates, est un complexe homoleptique.

3. Procédé selon la revendication 1 ou 2, **caractérisé en ce que** le complexe d'iridium tris-cyclométallé présente une géométrie faciale.

4. Procédé selon une ou plusieurs des revendications 1 à 3, **caractérisé en ce que** le complexe d'iridium tris-cyclométallé présente une structure de la formule (1) suivante, 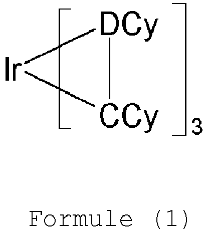 dans laquelle :
DCy est à chaque occurrence de manière identique ou différente un groupe hétéroaryle de 5 à 14 atomes de cycle aromatique, qui contient au moins un atome donneur neutre, choisi parmi l'azote ou un atome de carbone de carbène, par l'intermédiaire duquel le groupe est relié à l'iridium, et qui peut être substitué par un ou plusieurs substituants R ;
CCy est à chaque occurrence de manière identique ou différente un groupe aryle ou hétéroaryle de 5 à 14 atomes de cycle aromatique, qui contient un atome de carbone, par l'intermédiaire duquel le groupe est relié à l'iridium, et qui peut porter un ou plusieurs substituants R ;
les groupes DCy et CCy sont reliés l'un à l'autre par l'intermédiaire d'une liaison covalente et peuvent en outre être reliés l'un à l'autre par l'intermédiaire d'un radical R ;
R est à chaque occurrence de manière identique ou différente H, D, F, Cl, Br, I, NO₂, CN, OH, N(R¹)₂, OR¹, SR¹, B(OR¹)₂, CHO, COOH, CON(R¹)₂, C(=O)R¹, P(=O)(R¹)₂, S(=O)R¹, S(=O)₂R¹, Si(R¹)₃, un groupe alkyle linéaire de 1 à 20 atomes C ou un groupe alcényle ou alcynyle de 2 à 20 atomes C ou un groupe alkyle ramifié ou cyclique de 3 à 20 atomes C, le groupe alkyle, alcényle ou alcynyle pouvant à chaque fois être substitué avec un ou plusieurs radicaux R¹ et/ou un ou plusieurs groupes CH₂ non voisins pouvant être remplacés par 0, S, NR¹, CONR¹ ou CO-O, ou un système cyclique aromatique ou hétéroaromatique de 5 à 40 atomes de cycle aromatique, qui peut être substitué par un ou plusieurs radicaux R¹ ; deux ou davantage de substituants R, aussi bien sur le même cycle CCy ou DCy que sur les deux cycles CCy et DCy différents, pouvant former les uns avec les autres ou avec R¹ un système cyclique supplémentaire ;
R¹ est à chaque occurrence de manière identique ou différente H, D, F, Cl, Br, I, N(R²)₂, OR², SR², CN, NO₂, Si(R²)₃, B(OR²)₂, C(=O)R², P(=O)(R²)₂, S(=O)R², S(=O)₂R², OSO₂R², un groupe alkyle linéaire de 1 à 20 atomes C ou un groupe alcényle ou alcynyle de 2 à 20 atomes C ou un groupe alkyle ramifié ou cyclique de 3 à 20 atomes C, le groupe alkyle, alcényle ou alcynyle pouvant à chaque fois être substitué avec un ou plusieurs radicaux R² et/ou un ou plusieurs groupes CH₂ non voisins pouvant être remplacés par Si(R²)₂, C=O, NR², O, S ou CONR², ou un système cyclique aromatique ou hétéroaromatique de 5 à 40 atomes de cycle aromatique, qui peut à chaque fois être substitué par un ou plusieurs radicaux R² ; plusieurs substituants R¹ pouvant également former les uns avec les autres un système cyclique ;
R² est à chaque occurrence de manière identique ou différente H, D, F ou un radical organique aliphatique, aromatique et/ou hétéroaromatique, notamment un radical hydrocarboné, de 1 à 20 atomes C, dans lequel un ou plusieurs atomes H peuvent également être remplacés par F ;
deux ligands CCy-DCy peuvent également être reliés l'un à l'autre par l'intermédiaire de radicaux R en un ligand tétradentate ou les trois ligands CCy-DCy peuvent être reliés les uns avec les autres par l'intermédiaire de radicaux R en ligands hexadentates tripodaux.

5. Procédé selon une ou plusieurs des revendications 1 à 4, **caractérisé en ce qu'**un composé de la formule (2a) suivante est utilisé en tant que ligand bidentate, 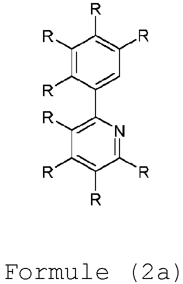 dans laquelle R présente les significations indiquées dans la revendication 4 et plusieurs ligands peuvent également être reliés par l'intermédiaire de R en un ligand tétradentate ou en un ligand hexadentate tripodal.

6. Procédé selon une ou plusieurs des revendications 1 à 5, **caractérisé en ce qu'**un composé qui est choisi parmi les formules (3) à (8) suivantes est utilisé en tant que composé d'iridium, IrHal₃ ^{∗} z H₂O ^{∗} y HHal A₃[IrHal₆] ^{∗} z H₂O ^{∗} y HHal Ir(OOCR)₃ Formule (3) Formule (4) Formule (5) 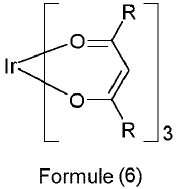 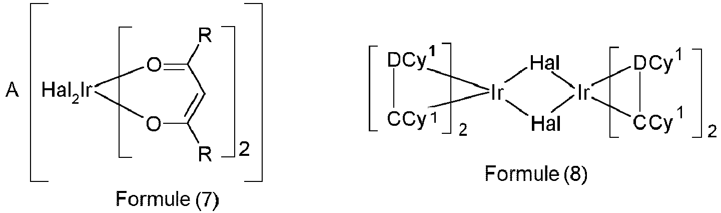 dans lesquelles R présente les significations indiquées dans la revendication 4, CCy¹ présente de manière identique ou différente les mêmes significations que CCy dans la revendication 4, DCy¹ présente de manière identique ou différente les mêmes significations que DCy dans la revendication 4, et les autres symboles et indices ont les significations suivantes :
Hal est à chaque occurrence de manière identique ou différente F, Cl, Br ou I ;
A est à chaque occurrence de manière identique ou différente un cation de métal alcalin, un cation ammonium, un cation tétraalkylammonium de 4 à 40 atomes C ou un cation tétraalkylphosphonium de 4 à 40 atomes C ;
z vaut 0 à 100 ;
y vaut 0 à 100.

7. Procédé selon une ou plusieurs des revendications 1 à 6, **caractérisé en ce que** le tensioactif anionique contient en tant que contre-ions des cations alcalins, alcalino-terreux, ammonium, tétraalkylammonium, tétraalkylphosphonium et/ou tétraarylphosphonium.

8. Procédé selon une ou plusieurs des revendications 1 à 7, **caractérisé en ce que** des benzènesulfonates de n-alkyle en C₁₀-C₁₃, des polyéthylène glycol-éther-sulfates de n-alkyle en C₁₂-C₁₄ ou des mélanges de ceux-ci sont utilisés en tant que tensioactif.

9. Procédé selon une ou plusieurs des revendications 1 à 8, **caractérisé en ce que** le procédé est réalisé en présence d'un additif, l'additif étant choisi dans le groupe constitué par les bases organiques, les bases inorganiques et les sels inorganiques.

10. Procédé selon la revendication 9, **caractérisé en ce que** l'additif est une base organique, qui est choisie dans le groupe constitué par les trialkylamines, les dérivés de pyridine, notamment les dérivés de 2,6-dialkylpyridine, ou les sels d'acides carboxyliques, ou **en ce que** l'additif est une base inorganique, qui est choisie dans le groupe constitué par les sels d'hydroxyde, de phosphate, d'hydrogénophosphate ou de sulfite, ou **en ce que** l'additif est un sel inorganique, qui est choisi dans le groupe constitué par les sels de chlorure, de bromure, d'iodure, d'hydrogénosulfate ou de sulfate.

11. Procédé selon une ou plusieurs des revendications 1 à 10, **caractérisé en ce que** la réaction est réalisée dans de l'eau ou un mélange d'eau avec un ou plusieurs solvants protiques polaires et/ou aprotiques polaires.

12. Procédé selon une ou plusieurs des revendications 1 à 11, **caractérisé en ce que** de l'eau sans ajout de solvants organiques est utilisée en tant que milieu de réaction.

13. Procédé selon une ou plusieurs des revendications 1 à 12, **caractérisé en ce que** la réaction est réalisée dans une plage de température allant de 80 à 250 °C.
